(19) Europäisches Patentamt / European Patent Office / Office européen des brevets

(11) EP 3 381 865 A1

(12) EUROPEAN PATENT APPLICATION
published in accordance with Art. 153(4) EPC

(43) Date of publication:
03.10.2018 Bulletin 2018/40

(51) Int Cl.:
$C01B\ 39/48$ (2006.01)     $B01D\ 53/86$ (2006.01)
$B01D\ 53/94$ (2006.01)     $B01J\ 29/76$ (2006.01)
$B01J\ 37/04$ (2006.01)     $B01J\ 37/10$ (2006.01)

(21) Application number: 16868331.6

(22) Date of filing: 01.11.2016

(86) International application number:
PCT/JP2016/082393

(87) International publication number:
WO 2017/090382 (01.06.2017 Gazette 2017/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 27.11.2015 JP 2015232040

(71) Applicant: Mitsubishi Chemical Corporation
Tokyo 100-8251 (JP)

(72) Inventors:
• HOTTA, Yuusuke
Chiyoda-ku
100-8251 (JP)
• TANAKA, Manabu
Chiyoda-ku
100-8251 (JP)
• TAKEWAKI, Takahiko
Chiyoda-ku
100-8251 (JP)
• MATSUO, Takeshi
Chiyoda-ku
100-8251 (JP)

(74) Representative: Hoffmann Eitle
Patent- und Rechtsanwälte PartmbB
Arabellastraße 30
81925 München (DE)

(54) METHOD FOR PRODUCING EIGHT-MEMBERED OXYGEN RING ZEOLITE AND AEI-TYPE ZEOLITE

(57) To provide methods for efficiently producing an 8-membered oxygen ring zeolite and an AEI-type zeolite at a low cost, with an organic structure-directing agent that is inexpensive and easily available industrially without using an expensive organic structure-directing agent, such as a cyclic quaternary ammonium salt. A method for producing an 8-membered oxygen ring zeolite, the method comprising mixing an aluminum atom raw material, a silicon atom raw material, an alkali-metal atom raw material, an organic structure-directing agent, and water with one another in order to prepare a raw material mixture, and producing an 8-membered oxygen ring zeolite from the raw material mixture by hydrothermal synthesis, the aluminum atom raw material including at least an aluminosilicate zeolite having a framework including a composite building unit d6r defined by International Zeolite Association (IZA), the aluminosilicate zeolite having a framework density of 15 $T/1000Å^3$ or less, the silicon atom raw material including at least the aluminosilicate zeolite and a silicon atom raw material other than the aluminosilicate zeolite, the organic structure-directing agent including at least a quaternary ammonium salt including 5 to 11 carbon atoms per molecule.

## Description

Technical Field

The present invention relates to a method for producing an 8-membered oxygen ring zeolite and a method for producing an AEI-type zeolite and specifically to methods for efficiently producing an 8-membered oxygen ring zeolite and, in particular, CHA-type and AEI-type zeolites at a low cost, with an organic structure-directing agent that is inexpensive and easily available industrially.

Background Art

Zeolites have a molecular sieve effect, an ion-exchange property, a catalytic property, an adsorption property, and the like due to the presence of pores resulting from the framework structure and have been widely used as an adsorbent, an ion-exchange agent, an industrial catalyst, or an environmental catalyst.

The pores of zeolites may be classified into a 6-membered oxygen ring, an 8-membered oxygen ring, a 10-membered oxygen ring, and the like in accordance with the number of oxygen atoms that constitute the pore. In order to separate small molecules, such as water molecules and carbon dioxide molecules, a zeolite that includes pores constituted by 8-membered oxygen rings and does not include pores constituted by a larger number of oxygen atoms than the 8-membered oxygen rings is preferably used in consideration of the relationship between molecular size and the pore diameter of zeolite. Examples of types of 8-membered oxygen ring zeolites include AEI, CHA, AFX, LEV, DDR, LTA, and RHO.

The terms "AEI", "CHA", and the like are the codes defined by IZA (International Zeolite Association) for the identification of zeolite and mean that the zeolites have AEI-type and CHA-type structures, respectively.

While the pore size of an AEI-type zeolite are as large as those of a CHA-type zeolite, the structure of an AEI-type zeolite shows higher catalytic activity. An example case where an AEI-type zeolite is used as an SCR (selective catalytic reduction) catalyst is described in PTL 1. In the case where an AEI-type zeolite is used as an SCR catalyst for treating an exhaust gas from automobiles or the like, the catalyst preferably has a low Si/Al ratio in order to treat the exhaust gas with certainty, in particular, during operation at low temperatures, such as startup engine.

In order to produce an 8-membered oxygen ring zeolite, an organic structure-directing agent (SDA) is used as a template. The type of the template varies with the structure of the 8-membered oxygen ring zeolite that is to be produced. PTL 2 discloses a common method for producing a CHA-type zeolite. Specifically, in PTL 2, an organic structure-directing agent that is TMDAI (N,N,N-trimethyl-1-adamantammonium iodide) derived from, for example, 1-adamantanamine is added to raw materials that are sodium silicate and aluminum sulfate, and the resulting mixture is subjected to hydrothermal synthesis at 140°C for 6 days in the presence of NaOH to form a CHA-type zeolite. In PTL 2, there is also described another production method in which an organic structure-directing agent including cations derived from 3-quinuclidinol and 2-exo-aminonorbornane is used.

A common method for producing an AEI-type zeolite is described in PTL 3. Specifically, in PTL 3, a Y-type zeolite (Framework density: 12.7 T/1000Å$^3$) and colloidal silica are used as raw materials. To the raw materials, an organic structure-directing agent, such as DMDMPOH (N,N-dimethyl-3,5-dimethylpiperidinium hydroxide), is added. The resulting mixture is stirred in the presence of NaOH and subsequently subjected to hydrothermal synthesis for 8 days to form an AEI-type zeolite.

NPL 1 discloses a method for synthesizing an AEI-type zeolite with a phosphorus-containing structure-directing agent and a Y-type zeolite. In the case where a phosphorus-containing structure-directing agent is used, hazardous diphosphorus pentoxide may be generated when calcining is performed in order to remove the structure-directing agent. Removing phosphorus by extraction or the like makes the process complex.

PTL 1: International Publication No. WO2013/159825
PTL 2: U.S. Patent No. 4544538
PTL 3: U.S. Patent No. 5958370

NPL 1: Chemical, Communications, 48, 8264-8266.

Summary of Invention

A method in which a cyclic quaternary ammonium salt, such as TMDAI or DMDMPIOH, is used as a template increases the costs and is unsuitable for producing a catalyst used in large amounts, such as a selective catalytic reduction (SCR) catalyst for removing of NOx in an exhaust gas. Since the above cyclic quaternary ammonium salts are not on the market, it may not be possible to supply the cyclic quaternary ammonium salts in a stable manner. Therefore, it has been difficult to industrially produce an 8-membered oxygen ring zeolite and, in particular, an AEI-type zeolite in quantity.

Accordingly, it is an object of the present invention to provide methods for efficiently producing an 8-membered oxygen ring zeolite and an AEI-type zeolite at a low cost, with an organic structure-directing agent that is inexpensive and easily available industrially without using an expensive organic structure-directing agent, such as a cyclic quaternary ammonium salt.

The summary of the present invention is as follows.

[1] A method for producing an 8-membered oxygen ring zeolite, the method comprising mixing an aluminum atom raw material, a silicon atom raw material, an alkali-metal atom raw material, an organic structure-directing agent, and water with one another in order to prepare a raw material mixture, and producing an 8-membered oxygen ring zeolite from the raw material mixture by hydrothermal synthesis,
the aluminum atom raw material including at least an aluminosilicate zeolite having a framework including a composite building unit d6r defined by International Zeolite Association (IZA), the aluminosilicate zeolite having a framework density of 15 T/1000Å$^3$ or less,
the silicon atom raw material including at least the aluminosilicate zeolite and a silicon atom raw material other than the aluminosilicate zeolite,
the organic structure-directing agent including at least a quaternary ammonium salt including 5 to 11 carbon atoms per molecule.
[2] The method for producing an 8-membered oxygen ring zeolite according to [1], wherein the aluminosilicate zeolite has a silica/alumina molar ratio of 20 or less.
[3] The method for producing an 8-membered oxygen ring zeolite according to [1] or [2], wherein the silicon atom raw material other than the aluminosilicate zeolite includes at least one selected from fumed silica, colloidal silica, non-crystalline silica, water glass, sodium silicate, methyl silicate, ethyl silicate, a silicon alkoxide, and an aluminosilicate gel.
[4] The method for producing an 8-membered oxygen ring zeolite according to any one of [1] to [3], wherein an 8-membered oxygen ring zeolite that serves as a seed crystal is mixed with the raw material mixture in an amount equal to 0.1% by weight or more of the amount of SiO$_2$ that is to be included in the raw material mixture when all the Si atoms included in the raw material mixture are replaced with SiO$_2$.
[5] The method for producing an 8-membered oxygen ring zeolite according to any one of [1] to [4], wherein the quaternary ammonium salt is tetraethylammonium hydroxide.
[6] The method for producing an 8-membered oxygen ring zeolite according to any one of [1] to [5], wherein the organic structure-directing agent includes at least one selected from an alicyclic heterocyclic compound including a hetero atom that is a nitrogen atom, an amine including an alkyl group, and an amine including a cycloalkyl group.
[7] The method for producing an 8-membered oxygen ring zeolite according to [4], wherein the seed crystal has an average particle size of 0.1 to 5.0 μm.
[8] The method for producing an 8-membered oxygen ring zeolite according to any one of [1] to [7], wherein the molar ratio of the amount of water included in the raw material mixture to the amount of Si included in the raw material mixture is 3 or more and 50 or less.
[9] A method for producing a CHA-type zeolite, the method comprising mixing an aluminum atom raw material, a silicon atom raw material, an alkali-metal atom raw material, an organic structure-directing agent, and water with one another in order to prepare a raw material mixture, and producing a CHA-type zeolite from the raw material mixture by hydrothermal synthesis,
the aluminum atom raw material including at least an aluminosilicate zeolite having a framework including a composite building unit d6r defined by International Zeolite Association (IZA),
the silicon atom raw material including at least the aluminosilicate zeolite and a silicon atom raw material other than the aluminosilicate zeolite,
the organic structure-directing agent including at least a quaternary ammonium salt including 5 to 11 carbon atoms per molecule.
[10] A method for producing an AEI-type zeolite, the method comprising mixing a zeolite framework-forming atom raw material, an alkali-metal atom raw material, an organic structure-directing agent, and water with one another in order to prepare a raw material mixture, and producing an AEI-type zeolite from the raw material mixture by hydrothermal synthesis,
the zeolite framework-forming atom raw material including at least an aluminosilicate zeolite having a framework including a composite building unit d6r defined by International Zeolite Association (IZA),
the organic structure-directing agent including at least a quaternary alkyl ammonium salt including 5 to 11 carbon atoms per molecule,

wherein an AEI-type zeolite that serves a seed crystal is mixed with the raw material mixture in an amount equal to 0.5% by weight or more of the amount of $SiO_2$ that is to be included in the raw material mixture when all the Si atoms included in the raw material mixture are replaced with $SiO_2$ in order to prepare a reactant mixture, and the reactant mixture is subjected to hydrothermal synthesis.

[11] The method for producing an AEI-type zeolite according to [10], wherein the aluminosilicate zeolite has a framework density of 14.5 $T/1000Å^3$ or less.

[12] The method for producing an AEI-type zeolite according to [10] or [11], wherein the zeolite framework-forming atom raw material includes the aluminosilicate zeolite and at least one selected from fumed silica, colloidal silica, non-crystalline silica, sodium silicate, methyl silicate, ethyl silicate, a silicon alkoxide, and an aluminosilicate gel.

[13] The method for producing an AEI-type zeolite according to any one of [10] to [12], wherein the quaternary alkyl ammonium salt is a quaternary alkyl ammonium hydroxide.

[14] The method for producing an AEI-type zeolite according to [13], wherein the quaternary alkyl ammonium hydroxide is tetraethylammonium hydroxide.

[15] A method for producing a catalyst, the method comprising producing a catalyst including an 8-membered oxygen ring zeolite by the method for producing an 8-membered oxygen ring zeolite according to any one of [1] to [8].

[16] A method for producing a catalyst, the method comprising producing an 8-membered oxygen ring zeolite by the method for producing an 8-membered oxygen ring zeolite according to any one of [1] to [8], and loading a metal other than Si or Al on the 8-membered oxygen ring zeolite.

[17] A method for producing a catalyst, the method comprising producing a catalyst including a CHA-type zeolite by the method for producing a CHA-type zeolite according to [9].

[18] A method for producing a catalyst, the method comprising producing a CHA-type zeolite by the method for producing a CHA-type zeolite according to [9], and loading a metal other than Si or Al on the CHA-type zeolite.

[19] A method for producing a catalyst, the method comprising producing a catalyst including an AEI-type zeolite by the method for producing an AEI-type zeolite according to any one of [10] to [14].

[20] A method for producing a catalyst, the method comprising producing an AEI-type zeolite by the method for producing an AEI-type zeolite according to any one of [10] to [14], and loading a metal other than Si or Al on the AEI-type zeolite.

[21] The method for producing a catalyst according to any one of [15] to [20], the method being a method for producing a catalyst used for treating an exhaust gas.

[22] The method for producing a catalyst according to any one of [15] to [20], the method being a method for producing a catalyst used for selectively reducing an exhaust gas containing nitrogen oxide.

Advantageous Effects of Invention

According to the present invention, it is possible to efficiently produce an 8-membered oxygen ring zeolite and, in particular, a CHA-type zeolite and an AEI-type zeolite at a low cost, with an organic structure-directing agent that is inexpensive and easily available industrially.

The present invention makes it possible to produce an 8-membered oxygen ring zeolite and, in particular, a CHA-type zeolite and an AEI-type zeolite in an industrially advantageous manner. An 8-membered oxygen ring zeolite, a CHA-type zeolite, and an AEI-type zeolite produced by the present invention are suitably used as a catalyst for treating an exhaust gas and, specifically, as a catalyst for selectively reducing an exhaust gas containing nitrogen oxide.

Brief Description of Drawings

[Fig. 1] Fig. 1 is a graph illustrating the results of evaluation of the catalytic activity of a catalyst 1 (an example of a CHA-type zeolite).

[Fig. 2] Fig. 2 is a graph illustrating the results of evaluation of the catalytic activity of a catalyst 2 (a comparative example of a CHA-type zeolite).

Description of Embodiments

Embodiments of the present invention are described below in detail. The embodiments described below are merely examples (typical examples) of embodiments of the present invention and do not limit the scope of the present invention.

The term "raw material mixture" used herein refers to a mixture of a zeolite framework-forming atom raw material, an alkali-metal atom raw material, an organic structure-directing agent, and water or a mixture of an aluminum atom raw material, a silicon atom raw material, an alkali-metal atom raw material, an organic structure-directing agent, and water. The term "reactant mixture" used herein refers to a substance prepared by further mixing the raw material mixture with a seed crystal. Note that the order in which the reactant mixture is prepared is not limited as described below. A seed crystal is not necessarily added to the raw material mixture that has been prepared prior to the addition of the seed crystal.

Hereinafter, the ratio of the amount of component added to the raw material mixture (as described above, the raw material mixture does not include the seed crystal; the term "raw material mixture" refers to the total of components of the reactant mixture which are other than the seed crystal) to the amount of $SiO_2$ that is to be included in the raw material mixture when all the Si atoms included in the raw material mixture are replaced with $SiO_2$ may be referred to as "proportion to $SiO_2$ equivalent".

[Method for producing the 8-membered oxygen ring zeolite]

The method for producing the 8-membered oxygen ring zeolite of the present invention, comprises mixing an aluminum atom raw material, a silicon atom raw material, an alkali-metal atom raw material, an organic structure-directing agent, and water with one another in order to prepare a raw material mixture, and producing an 8-membered oxygen ring zeolite from the raw material mixture by hydrothermal synthesis, the aluminum atom raw material including at least an aluminosilicate zeolite having a framework including a composite building unit d6r defined by International Zeolite Association (IZA), the aluminosilicate zeolite having a Framework density of 15 T/1000Å$^3$ or less, the silicon atom raw material including at least the aluminosilicate zeolite and a silicon atom raw material other than the aluminosilicate zeolite, the organic structure-directing agent including at least a quaternary ammonium salt including 5 to 11 carbon atoms per molecule.

The 8-membered oxygen ring zeolite (hereinafter sometimes referred to as "8-membered oxygen ring zeolite of the present invention") produced according to the present invention refers to a zeolite that has a pore having the largest number of oxygen among pores consisting of oxygen and T element (element forming a framework other than oxygen). For example, when pores of oxygen 12-membered ring and 8-membered ring are present like MOR type zeolite, it is regarded as a zeolite having 12-membered oxygen ring.

The oxygen 8-membered ring zeolite has a structure of ABW, ACO, AEI, AEN, AFN, AFT, AFX, ANA, APC, APD, ATN, ATT, ATV, AWO, AWW, BCT, BIK, BRE, CAS, CDO, CHA, DDR, DFT, EAB, EDI, EPI, ERI, ESV, GIS, GOO, IHW, ITE, ITW, JBW, KFI, LEV, LTA, MER, MON, MTF, NSI, OWE, PAU, PHI, RHO, RTE, RTH, RWR, SAS, SAT, SAV, SIV, THO, TSC, UEI, UFI, VNI, YUG, and ZON according to a code specifying the structure of zeolite defined by International Zeolite Association (IZA). It is preferably AEI type, CHA type, AFX type, LEV type, DDR type, LTA type, RHO type. More preferred are AEI type and CHA type. The oxygen 8-membered ring zeolite is particularly preferably of the AEI type.

The structure of a zeolite is identified from the data obtained by X-ray diffraction. However, in the measurement of actual zeolites, peak intensity ratios and peak positions slightly shift under the influence of the growth direction of the zeolites, the ratios of constitutional elements, the substances adsorbed, the presence of defects, the degree of dryness, and the like. Accordingly, values completely the same as the parameters of structure described in the IZA specifications are not always measured actually; a deviation of about 10% is acceptable.

The zeolite is a zeolite defined by International Zeolite Association (IZA) and is preferably an aluminosilicate zeolite. An aluminosilicate zeolite has a framework structure constituted by at least oxygen, aluminum (Al), and silicon (Si) atoms. Some of the above atoms may be replaced with another atom (Me).

The compositional proportions (molar ratios) of Me, Al, and Si constituting the framework structure of the aluminosilicate zeolite included in the 8-membered oxygen ring zeolite are not limited. When the molar ratios of Me, Al, and Si to the total amount of Me, Al, and Si are represented by x, y, and z, respectively, x is normally 0 or more and 0.3 or less. If x is larger than the upper limit, the likelihood of impurities mixing into the zeolite during synthesis is high.

The molar ratio y is normally 0.001 or more, is preferably 0.005 or more, is more preferably 0.01 or more, and is further preferably 0.05 or more. The molar ratio y is normally 0.5 or less, is preferably 0.4 or less, is more preferably 0.3 or less, and is further preferably 0.25 or less.

The molar ratio z is normally 0.5 or more, is preferably 0.6 or more, is more preferably 0.7 or more, and is further preferably 0.75 or more. The molar ratio z is normally 0.999 or less, is preferably 0.995 or less, is more preferably 0.99 or less, and is further preferably 0.95 or less.

If y and z are outside the above ranges, it may be difficult to synthesis the zeolite. In addition, if such a zeolite is used as a catalyst, the zeolite may fail to exhibit activity because the number of acid sites is considerably small.

The number of types of the other atom Me may be one or two or more. The other atom Me is preferably an element belonging to Period 3 or 4 of the periodic table.

<Aluminosilicate Zeolite Used for Producing 8-membered oxygen ring Zeolite>

One of the features of the method for producing the 8-membered oxygen ring zeolite according to the present invention is to use an aluminosilicate zeolite having a framework including a composite building unit d6r defined by International Zeolite Association (IZA) and having a framework density of 15/T/1000Å$^3$ or less as an aluminum atom raw material. Framework density is the value determined by Ch. Baerlocher, et al. and described in ATLAS OF ZEOLITE FRAME WORK TYPES (Sixth Revised Edition, 2007, ELSEVIER) and represents framework density.

The term "Framework density" refers to the number of T atoms (atoms other than oxygen atoms which constitute the framework structure of the zeolite) included in the unit volume (1000 Å$^3$) of the zeolite. This value is determined by the composition of the zeolite.

The advantageous effects of using the aluminosilicate zeolite having a framework density of 15 T/1000Å$^3$ or less as a framework atom raw material in the process for producing the 8-membered oxygen ring zeolite have not been clarified in detail but are presumably as follows.

A zeolite having a framework density of 15 T/1000Å$^3$ or less, that is, a relatively low framework density, has high solubility and therefore easily becomes decomposed into d6r that constitutes the framework or into nanoparts that constitute d6r. The decomposed parts again form a crystal structure so as to surround the organic structure-directing agent. Thus, the 8-membered oxygen ring zeolite is formed.

In consideration of ease of decomposition of the aluminosilicate zeolite into the nanoparts in alkali, the framework density of the zeolite is preferably 15 T/1000Å$^3$ or less, is more preferably 14.8 T/1000Å$^3$ or less, is further preferably 14.6 T/1000Å$^3$ or less, is particularly preferably 14.5 T/1000Å$^3$ or less, and is most preferably 14.3 T/1000Å$^3$ or less. Since an aluminosilicate zeolite having an excessively small framework density may excessively dissolve and fail to serve as the nanoparts, the framework density of the aluminosilicate zeolite is preferably 10 T/1000Å$^3$ or more, is more preferably 10.5 T/1000Å$^3$ or more, is further preferably 10.6 T/1000Å$^3$ or more, and is particularly preferably 10.8 T/1000Å$^3$ or more.

From the viewpoint of the mechanism of action of the aluminosilicate zeolite used in the present invention, as the aluminosilicate zeolite, one containing the d6r defined in the framework as the composite building unit by International Zeolite Association (IZA) is used. More specifically, it is possible to select one of AEI, AFT, AFX, CHA, EAB, ERI, FAU, GME, KFI, LEV, LTL, LTN, MOZ, MSO, MWW, OFF, SAS, SAT, SAV, SBS, SBT, SZR, TSC, WEN, more preferably AEI, AFT, AFX, CHA, ERI, FAU, KFI, LEV, LTL, MWW, SAV, more preferably AEI, AFX, CHA, FAU, particularly preferably FAU type zeolite (Y type zeolite)).

The molar ratio of silica (SiO$_2$) /alumina (Al$_2$O$_3$) of the aluminosilicate zeolite is preferably 3 to 50. When this value is larger than the above upper limit, the solubility in basic solution is extremely high and it is not suitable. When the silica/alumina molar ratio is 30 or less, particularly 25 or less, especially 20 or less, especially 10 or less, it is inexpensive and preferable because it is commercially available. The lower limit of the silica/alumina molar ratio of the aluminosilicate zeolite is preferably 3 or more, particularly preferably 5 or more, from the solubility of the aluminosilicate zeolite.

The silica/alumina molar ratio of the 8-membered oxygen ring zeolite, which is to be produced, is preferably 20 to 30 in the case where the 8-membered oxygen ring zeolite is used in the application described below or, in particular, as an SCR catalyst. In order to produce such an 8-membered oxygen ring zeolite, an aluminosilicate zeolite having a high silica/alumina molar ratio, that is, specifically, an aluminosilicate zeolite having a higher silica/alumina molar ratio than the 8-membered oxygen ring zeolite that is to be produced, has been used as a raw material. More specifically, an expensive aluminosilicate zeolite having a silica/alumina molar ratio of 25 or more has been used as a raw material. However, according to the present invention, it is possible to use an inexpensive aluminosilicate zeolite having a silica/alumina molar ratio of 20 or less as described above by using the specific aluminosilicate zeolite described above in combination with a silicon atom raw material other than the specific aluminosilicate zeolite as described below. From the above viewpoint, the silica/alumina molar ratio of the aluminosilicate zeolite is preferably 20 or less.

For the above reasons, the silica (SiO$_2$)/alumina (Al$_2$O$_3$) molar ratio of the aluminosilicate zeolite is preferably 3 or more and 20 or less, is more preferably 5 or more and 20 or less, and is most preferably 5 or more and 15 or less.

Only one type of aluminosilicate zeolite may be used alone. Alternatively, two or more types of aluminosilicate zeolites may be used in a mixture.

The aluminosilicate zeolite is used such that the total amount of the aluminosilicate zeolite, the aluminum atom raw material and/or the silicon atom raw material other than the aluminosilicate zeolite, which is used as needed depending on the Al and Si contents in the 8-membered oxygen ring zeolite that is to be produced, is equal to the amounts of the aluminum atom raw material and the silicon atom raw material used which are described below. In the present invention, the amount of the specific aluminosilicate zeolite described above is preferably 50% by weight or more, is particularly preferably 70% to 100% by weight, and is further preferably 90% to 100% by weight of the total amount of aluminum atom raw materials in order to achieve the advantageous effects of the present invention with effect by using the specific aluminosilicate zeolite described above. The amount of the specific aluminosilicate zeolite described above is preferably 60% by weight or less, is particularly preferably 15% to 40% by weight, and is further preferably 2% to 10% by weight of the total amount of silicon atom raw materials.

<Seed Crystal>

The 8-membered oxygen ring zeolite used as a seed crystal is desirably a zeolite having the same structure as the zeolite that is to be produced.

The average particle size of the 8-membered oxygen ring zeolite used as a seed crystal is preferably 0.1 to 5.0 μm and is particularly preferably 0.1 to 3.0 μm. Setting the particle size of the seed crystal to be smaller than the above upper limit may reduce the amount of production time. Setting the particle size of the seed crystal to be larger than the above lower limit increases ease of handling.

The amount of seed crystal used is 0.1% by weight or more in terms of proportion to $SiO_2$ equivalent. The amount of seed crystal used is preferably 0.5% by weight or more and is more preferably 1% by weight or more in order to facilitate the reaction. Although the upper limit for the amount of seed crystal used is not limited, the amount of seed crystal used is normally 30% by weight or less, is preferably 25% by weight or less, is more preferably 22% by weight or less, and is further preferably 20% by weight or less in terms of proportion to $SiO_2$ equivalent in order to reduce the production costs to a sufficient degree.

The 8-membered oxygen ring zeolite used as a seed crystal may be a non-calcinated product that has not been calcined after hydrothermal synthesis or a calcinated product that has been calcined after hydrothermal synthesis. In the case where hydrothermal synthesis is performed under a high-temperature, high-alkaline condition under which the seed crystal is likely to dissolve, it is preferable to use a non-calcinated product, which is less likely to dissolve. In the case where hydrothermal synthesis is performed under a low-temperature, low-alkaline condition under which the seed crystal zeolite is less likely to dissolve, it is preferable to use a calcinated product, which is likely to dissolve.

There have been commonly proposed a technique for producing a zeolite in which a seed crystal is used for increasing the yield of the zeolite. In the present invention, a desired zeolite can be produced by adding a specific zeolite to a material from which the desired zeolite cannot be produced. This advantageous effect is different from the seed crystal effect used in the related art.

<Aluminum Atom Raw Material>

In the present invention, an aluminum atom raw material other than the specific aluminosilicate zeolite described above may be used in order to adjust the composition of the reactant mixture. The aluminum atom raw material other than the aluminosilicate zeolite is not limited; publicly known, various substances may be used. Examples thereof include amorphous aluminum hydroxide, aluminum hydroxide having a gibbsite crystal structure, aluminum hydroxide having a bayerite crystal structure, aluminum nitrate, aluminum sulfate, aluminum oxide, sodium aluminate, boehmite, pseudo boehmite, and an aluminum alkoxide. An aluminosilicate gel, which is described below as an example of the silicon atom raw material, may also be used as an aluminum atom raw material. The above aluminum atom raw materials may be used alone or in a mixture of two or more.

The amount of aluminum atom raw material (including the specific aluminosilicate zeolite described above) used is normally 0.02 or more, is preferably 0.04 or more, is more preferably 0.06 or more, and is further preferably 0.08 or more in terms of the molar ratio of aluminum (Al) included in the aluminum atom raw material to silicon (Si) included in the raw material mixture that does not include the seed crystal in consideration of ease of preparation of the reactant mixture and production efficiency. Although the upper limit for the amount of aluminum atom raw material used is not specified, the above molar ratio is normally 2 or less, is preferably 1 or less, is more preferably 0.4 or less, and is further preferably 0.2 or less in order to uniformly dissolve the aluminum atom raw material in the reactant mixture.

In the case where an aluminum atom raw material other than the specific aluminosilicate zeolite described above is used in combination, the amount of the specific aluminosilicate zeolite described above is preferably 50% by weight or more, is particularly preferably 70% to 100% by weight, and is further preferably 90% to 100% by weight of the total amount of the aluminum atom raw materials in order to achieve the advantageous effects of the present invention with effect by using the specific aluminosilicate zeolite described above.

<Silicon Atom Raw Material>

In the present invention, a silicon atom raw material other than the specific aluminosilicate zeolite described above is used in order to adjust the composition of the reactant mixture. The silicon atom raw material other than the aluminosilicate zeolite is not limited; publicly known, various substances may be used. Examples thereof include fumed silica, colloidal silica, non-crystalline silica, sodium silicate, methyl silicate, ethyl silicate, a silicon alkoxide, such as trimethylethoxysilane, tetraethyl orthosilicate, and an aluminosilicate gel. Fumed silica, colloidal silica, non-crystalline silica, sodium silicate, methyl silicate, ethyl silicate, a silicon alkoxide, and an aluminosilicate gel are preferable. The above silicon atom raw materials may be used alone or in a mixture of two or more.

Using the specific aluminosilicate zeolite described above in combination with a silicon atom raw material other than the aluminosilicate zeolite enables the inexpensive aluminosilicate zeolite having a low silica/alumina molar ratio to be used.

The silicon atom raw material is used such that the proportions of the amounts of the other raw materials used to the amount of the silicon atom raw material used each fall within the preferable range described above or below. The amount of the specific aluminosilicate zeolite described above is preferably 60% by weight or less, is particularly preferably 15% to 40% by weight, and is further preferably 2% to 10% by weight of the total amount of the silicon atom raw materials in order to achieve the advantageous effects of the present invention with effect by using the specific aluminosilicate zeolite described above.

<Alkali-Metal Atom Raw Material>

The alkali metal atom included in the alkali-metal atom raw material used in the present invention is not limited; publicly known alkali metal atoms used for the synthesis of a zeolite may be used. It is preferable to perform crystallization in the presence of at least one alkali metal ion selected from the group consisting of lithium, sodium, potassium, rubidium, and cesium. Among the above alkali metal atoms, sodium and potassium are preferable, and sodium is particularly preferable.

When the alkali-metal atom raw material includes the above alkali metal atoms, crystallization may be facilitated. In addition, the formation of the by-product (impurity crystal) may be reduced.

The alkali-metal atom raw material may be an inorganic acid salt of the above alkali metal atom, such as a hydroxide, an oxide, a sulfate, a nitrate, a phosphate, a chloride, or a bromide, or an organic acid salt of the above alkali metal atom, such as an acetate, an oxalate, or a citrate. The above alkali-metal atom raw materials may be used alone or in a mixture of two or more.

The molar ratio of the amount of alkali-metal atom raw material used to the amount of silicon (Si) included in the raw material mixture, which does not include the seed crystal added in the present invention, is preferably 0.1 or more and 0.8 or less, since using an adequate amount of alkali-metal atom raw material increases the likelihood of the organic structure-directing agent described below coordinating to aluminum in a suitable state and thereby facilitates the formation of the crystal structure. The above molar ratio is more preferably 0.13 or more, is further preferably 0.15 or more, is particularly preferably 0.18 or more, and is most preferably 0.2 or more. The above molar ratio is more preferably 0.8 or less, is further preferably 0.7 or less, is particularly preferably 0.6 or less, and is most preferably 0.5 or less.

<Organic Structure-Directing Agent>

Examples of the organic structure-directing agent (also referred to as "template"; hereinafter, the organic structure-directing agent may be referred to as "SDA") include a quaternary ammonium salt, an amine, and an imine, which are used for the production of a zeolite. In the present invention, at least the compound (1) below is used as a template. It is preferable to use at least one compound selected from the group consisting of (2a) to (2c) below. Since the above compounds are easily available and inexpensive, they are suitably used in order to reduce the production costs.

(1) Quaternary ammonium salt including 5 to 11 carbon atoms per molecule
(2a) Alicyclic heterocyclic compound including a hetero atom that is a nitrogen atom
(2b) Amine including an alkyl group (alkylamine)
(2c) Amine including a cycloalkyl group (cycloalkylamine)

(1) Quaternary ammonium salt including 5 to 11 carbon atoms per molecule

The molecular weight of the quaternary ammonium salt including 5 to 11 carbon atoms per molecule is normally 300 or less, is preferably 250 or less, and is more preferably 100 or more and 200 or less. Examples of the quaternary ammonium salt including 5 to 11 carbon atoms per molecule include tetraethylammonium hydroxide and triethylmethylammonium hydroxide. Tetraethylammonium hydroxide is preferable since it is easily available industrially. The above quaternary ammonium salts including 5 to 11 carbon atoms per molecule may be used alone or in a mixture of two or more.

(2a) Alicyclic heterocyclic compound containing a nitrogen atom as a heteroatom

The heterocyclic ring of the alicyclic heterocyclic compound containing a nitrogen atom as a hetero atom is usually a 5- to 7-membered ring, preferably a 6-membered ring. The number of hetero atoms contained in the heterocyclic ring is usually 3 or less, preferably 2 or less. A hetero atom other than a nitrogen atom is arbitrary, but one containing an oxygen atom in addition to a nitrogen atom is preferable. The position of the heteroatom is not particularly limited, but it is preferable that the heteroatom is not adjacent.

The molecular weight of the alicyclic heterocyclic compound containing a nitrogen atom as a heteroatom is usually 250 or less, preferably 200 or less, more preferably 150 or less, usually 30 or more, preferably 40 or more, further preferably 50 or more.

Examples of alicyclic heterocyclic compounds containing a nitrogen atom as a heteroatom include morpholine, N-methylmorpholine, piperidine, piperazine, N, N'-dimethylpiperazine, 1,4-diazabicyclo (2, 2, 2) octane, N-methylpiperidine, 3-methylpiperidine, quinuclidine, pyrrolidine, N-methylpyrrolidone, hexamethyleneimine and the like. One of these may be used alone, or two or more of them may be mixed and used. Among them, morpholine, hexamethyleneimine, piperidine are preferable, and morpholine is particularly preferable.

(2b) Alkylamine

The alkyl group of the alkylamine is usually a chain alkyl group. The number of alkyl groups contained in one molecule of the alkylamine is not particularly limited, but is preferably 3. The alkyl group of the alkylamine may partially have a substituent such as a hydroxyl group. The number of carbon atoms of the alkyl group of the alkylamine is preferably 4 or less, and the total number of carbon atoms of all alkyl groups in one molecule is more preferably 5 or more and 30 or less.

The molecular weight of the alkylamine is usually 250 or less, preferably 200 or less, more preferably 150 or less.

Examples of the alkylamine include di-n-propylamine, tri-n-propylamine, tri-isopropylamine, triethylamine, triethanolamine, N, N-diethylethanolamine, N, N-dimethylethanolamine, N-methyldiethanolamine , N-methylethanolamine, di-n-butylamine, neopentylamine, di-n-pentylamine, isopropylamine, t-butylamine, ethylenediamine, di-isopropyl-ethylamine, N-methyl-n-butylamine and the like. One of these may be used alone, or two or more of them may be mixed and used. Among them, di-n-propylamine, tri-n-propylamine, tri-isopropylamine, triethylamine, di-n-butylamine, isopropylamine, t-butylamine, ethylenediamine, di-isopropyl-ethylamine, N-methyl-n-butylamine is preferable, and triethylamine is particularly preferable.

(2c) Cycloalkylamine

As the cycloalkylamine, those having an alkyl group with 4 to 10 carbon atoms are preferable, and among them, cyclohexylamine is preferable. One kind of cycloalkyl amine may be used alone, or two or more kinds may be used in admixture.

The above organic structure-directing agents may be used alone or in a mixture of two or more. In the method for producing an 8-membered oxygen ring zeolite according to the present invention, among the above organic structure-directing agents, at least the quaternary ammonium salt including 5 to 11 carbon atoms per molecule, which is preferably tetraethylammonium hydroxide, is used.

The molar ratio of the amount of organic structure-directing agent used to the amount of silicon (Si) included in the raw material mixture, which does not include the seed crystal, is normally 0.05 or more, is preferably 0.1 or more, is more preferably 0.15 or more, and is further preferably 0.2 or more in consideration of ease of formation of crystals. The above molar ratio of the amount of organic structure-directing agent used is normally 1 or less, is preferably 0.8 or less, is more preferably 0.6 or less, and is further preferably 0.5 or less in order to reduce the costs to a sufficient degree.

<Water>

The molar ratio of the amount of water used to the amount of silicon (Si) included in the raw material mixture, which does not include the seed crystal, is normally 3 or more, is preferably 5 or more, is more preferably 8 or more, and is further preferably 10 or more in consideration of ease of formation of crystals. The above molar ratio of the amount of water used is normally 50 or less, is preferably 40 or less, is more preferably 30 or less, and is further preferably 25 or less in order to reduce the costs of liquid waste treatment to a sufficient degree.

<Mixing of Raw Materials (Preparation of Reactant Mixture)>

In the production method according to the present invention, the aluminosilicate zeolite, the silicon atom raw material other than the aluminosilicate zeolite, the aluminum atom raw material other than the aluminosilicate zeolite, which is used as needed, the alkali-metal atom raw material, the organic structure-directing agent, and water are mixed with one another in order to prepare a raw material mixture. The raw material mixture is mixed with a desired 8-membered oxygen ring zeolite, which serves as a seed crystal added as needed, to a sufficient degree. The resulting reactant mixture is subjected to hydrothermal synthesis.

The order in which the raw materials are mixed with one another is not limited; it is preferable to add the aluminosilicate zeolite after an alkaline solution has been prepared in order to dissolve the raw materials further uniformly. That is, it is preferable to mix water, the organic structure-directing agent, and the alkali-metal atom raw material with one another in order to prepare an alkaline solution and subsequently add the silicon atom raw material other than the aluminosilicate zeolite, the optional aluminum atom raw material, the aluminosilicate zeolite, the 8-membered oxygen ring zeolite to the alkaline solution in this order.

In the present invention, in addition to the aluminosilicate zeolite, the aluminum atom raw material, the silicon atom raw material, the alkali-metal atom raw material, the organic structure-directing agent, water, and the 8-membered oxygen ring zeolite, which serves as a seed crystal, other additives such as a catalyst and an adjuvant may be added as needed in any step in order to prepare the reactant mixture.

<Aging>

The reactant mixture prepared in the above manner may be subjected to hydrothermal synthesis immediately after preparation and is preferably aged for a predetermined amount of time at predetermined temperatures in order to produce a zeolite with high crystallinity. In particular, when scale-up is performed, miscibility may become degraded and the raw materials may fail to be mixed sufficiently. Accordingly, aging the raw materials for a predetermined amount of time while stirring the raw materials enables the raw materials to be mixed further uniformly. The aging temperature is normally 100°C or less, is preferably 80°C or less, and is more preferably 60°C or less. Although the lower limit for the aging temperature is not specified, the aging temperature is normally 0°C or more and is preferably 10°C or more. During aging, the aging temperature may be maintained to be constant or changed in a stepwise or continuous manner. The amount of aging time is not limited. The amount of aging time is normally 2 hours or more, is preferably 3 hours or more, and is more preferably 5 hours or more. The amount of aging time is normally 30 days or less, is preferably 10 days or less, and is further preferably 4 days or less.

<Hydrothermal Synthesis>

Hydrothermal synthesis is performed by charging the reactant mixture prepared in the above-described manner or an aqueous gel prepared by aging the reactant mixture into a pressure-resistant container and maintaining a predetermined temperature at an auto-generated pressure or a gas-increased pressure that does not inhibit crystallization while performing stirring, rotating or shaking the container, or leaving the container to stand.

The reaction temperature for hydrothermal synthesis is normally 120°C or more and 230°C or less, is preferably 220°C or less, is more preferably 200°C or less, and is further preferably 190°C or less. The amount of reaction time is not limited. The amount of reaction time is normally 2 hours or more, is preferably 3 hours or more, and is more preferably 5 hours or more. The amount of reaction time is normally 30 days or less, is preferably 10 days or less, is more preferably 7 days or less, and is further preferably 5 days or less. During the reaction, the reaction temperature may be maintained to be constant or changed in a stepwise or continuous manner.

Conducting the reaction under the above conditions reduces the formation of a zeolite other than the desired 8-membered oxygen ring zeolite and enables the desired 8-membered oxygen ring zeolite to be produced at a high yield.

<Recovery of 8-Membered Oxygen Ring Zeolite>

Subsequent to the hydrothermal synthesis described above, the product, that is, an 8-membered oxygen ring zeolite, is separated from the hydrothermal synthesis reaction liquid.

The zeolite (hereinafter, referred to as "SDA and the like-containing zeolite") includes both or either of the organic structure-directing agent and the alkali metal contained in the pores. The method for separating the SDA and the like-containing zeolite from the hydrothermal synthesis reaction liquid is not limited; normally, filtration, decantation, direct drying, and the like are used.

The SDA and the like-containing zeolite separated and recovered from the hydrothermal synthesis reaction liquid may optionally be cleaned with water, dried, and subsequently, for example, calcined in order to remove the organic structure-directing agent and the like used in the production of the zeolite. Thus, a zeolite that does not include the organic structure-directing agent or the like can be produced.

In the case where the 8-membered oxygen ring zeolite according to the present invention is used as a catalyst (including a catalyst carrier), an adsorbent, or the like, the above components are removed as needed before use.

For removing both or either of the organic structure-directing agent and the alkali metal from the SDA and the like-containing zeolite, a liquid phase treatment using an acidic solution or a chemical solution containing a constituent capable of decomposing the organic structure-directing agent, an ion-exchange treatment using a resin or the like, and a thermal decomposition treatment may be employed. The above treatments may be performed in combination. The organic structure-directing agent and the like included in the SDA and the like-containing zeolite can be removed normally by, for example, calcinating the SDA and the like-containing zeolite at 300°C to 1000°C in air, an oxygen-containing inert gas, or an inert gas atmosphere or by performing extraction with an organic solvent such as an aqueous ethanol solution. It is preferable to remove the organic structure-directing agent and the like by calcinating in consideration of productivity. In such a case, the calcinating temperature is preferably 400°C or more, is more preferably 450°C or more, and is further preferably 500°C or more. The calcinating temperature is preferably 900°C or less, is more preferably 850°C or less, and is further preferably 800°C or less. Examples of the inert gas include nitrogen.

In the production method according to the present invention, it is possible to produce an 8-membered oxygen ring zeolite having a wide range of Si/Al ratio (molar ratio), which has not been possible to produce, by changing the charge compositional ratio. Therefore, the Si/Al ratio of the zeolite is preferably, but not limited to, 50 or less, is more preferably 40 or less, is further preferably 35 or less, is particularly preferably 25 or less, and is most preferably 20 or less, since the larger the number of active sites as a catalyst, the higher the suitability. The Si/Al ratio is preferably 2 or more, is more preferably 3 or more, is further preferably 4 or more, and is particularly preferably 4.5 or more because, when a zeolite having a framework including a large amount of Al is subjected to a gas containing water vapor, the structure is likely to become destroyed as a result of dealumination from the framework.

In the case where the 8-membered oxygen ring zeolite according to the present invention is used particularly as an SCR catalyst, the Si/Al ratio of the 8-membered oxygen ring zeolite according to the present invention is preferably 2 or more and 50 or less, is more preferably 3 or more and 40 or less, is further preferably 4 or more and 35 or less, and is particularly preferably 4.5 or more and 30 or less in order to achieve high resistance to high-temperature water vapor.

The average particle size of the 8-membered oxygen ring zeolite according to the present invention is not limited and is preferably 0.1 to 10 $\mu$m, is more preferably 0.2 to 8 $\mu$m, and is further preferably 0.5 to 5 $\mu$m in order to enhance the gas diffusibility of the zeolite used as a catalyst.

The specific surface area of the 8-membered oxygen ring zeolite according to the present invention is not limited and is preferably 300 to 1000 $m^2$/g, is more preferably 400 to 800 $m^2$/g, and is further preferably 500 to 750 $m^2$/g in order to increase the number of active sites present in the surfaces of the pores.

The ion-exchange capacity of the zeolite is described below.

Ion-exchange capacity may also be achieved by replacing an alkali metal portion resulting from the alkali-metal atom raw material or alkali atoms included in the zeolite framework-forming atom raw material, the organic structure-directing agent, or the seed crystal zeolite, with hydrogen (H type) or ammonium ($NH_4$ type). In such a case, any publicly known technique may be employed. For example, the zeolite is treated using an ammonium salt, such as $NH_4NO_3$, or an acid, such as hydrochloric acid, normally at room temperature to 100°C, and subsequently cleaned with water.

<Application of 8-Membered Oxygen Ring Zeolite>

The application of the 8-membered oxygen ring zeolite according to the present invention is not limited. The 8-membered oxygen ring zeolite according to the present invention is suitably used as a catalyst, an adsorbent, a separation material, or the like. As described in PTL 1 above, the zeolite is particularly suitably used as, for example, a catalyst for purifying an exhaust gas from automobiles or the like. Alternatively, the zeolite may be used as a petrochemical catalyst, such as a catalyst for chemical synthesis, such as the synthesis of propylene from ethylene, the synthesis of an olefin from methane, or the like.

<Catalyst for Treating Exhaust Gas>

In the case where the 8-membered oxygen ring zeolite according to the present invention is used as a catalyst for treating an exhaust gas, such as an automotive exhaust gas purification catalyst, the 8-membered oxygen ring zeolite according to the present invention may be used directly. Alternatively, a metal may be added to the 8-membered oxygen ring zeolite as needed. Specific examples of the method for adding a metal to the zeolite include impregnation, liquid-phase ion exchange, and solid-phase ion exchange. In another case, a zeolite including a metal can be directly synthesized by adding the metal prior to the hydrothermal synthesis reaction. The state of the metal included in the zeolite including a metal is classified into two types: the case where the metal is included in the framework structure and the case where the metal is not included in the framework structure.

The catalyst including the 8-membered oxygen ring zeolite according to the present invention may be mixed with a binder and formed into a granular shape or formed into a predetermined shape, such as a honeycomb shape. For example, the catalyst is mixed with an inorganic binder, such as silica, alumina, or clay mineral, or inorganic fibers, such as alumina fibers or glass fibers. The resulting mixture is formed into a granular shape or a predetermined shape, such as a honeycomb shape, by extrusion, compression, or the like and subsequently calcinated. Hereby, a particulate catalyst, a honeycomb catalyst, or a catalyst shaped product can be produced.

The catalyst including the 8-membered oxygen ring zeolite according to the present invention may be applied to a base material, such as a sheet or a honeycomb. For example, a catalyst including the 8-membered oxygen ring zeolite according to the present invention is mixed with an inorganic binder, such as silica, alumina, or clay mineral, to form a slurry. The slurry is applied onto the surface of a base material composed of an inorganic substance, such as cordierite, and then calcinated. It is preferable to apply the slurry to a base material having a honeycomb shape in order to prepare a honeycomb catalyst having a honeycomb shape on which the catalyst is loaded.

Although an inorganic binder is used in the above example since a catalyst for treating exhaust gas is described as an example, an organic binder may be used instead depending on the application or the conditions under which the catalyst is used.

The catalyst including the 8-membered oxygen ring zeolite according to the present invention is effectively used as a NOx selective reduction catalyst, such as an automotive exhaust gas purification catalyst, which is brought into contact with an exhaust gas containing nitrogen oxide in order to remove nitrogen oxide.

A catalyst for treating exhaust gas which is produced by adding a metal other than Al or Si to the 8-membered oxygen ring zeolite according to the present invention or loading the metal on the 8-membered oxygen ring zeolite is particularly effectively used as a NOx selective reduction catalyst. The metal element added to or loaded on the 8-membered oxygen ring zeolite as a catalyst for treating exhaust gas is preferably a transition metal. Specific examples thereof include iron, cobalt, palladium, iridium, platinum, copper, silver, gold, cerium, lanthanum, praseodymium, titanium, and zirconium. The metal element added to or loaded on the 8-membered oxygen ring zeolite is further preferably iron and/or copper. Two or more metals may be added to or loaded on the 8-membered oxygen ring zeolite in combination. The amount of metal element other than Al or Si included in or loaded on the zeolite is normally 0.1% by weight or more, is preferably 0.3% by weight or more, is more preferably 0.5% by weight or more, and is particularly preferably 1.0% by weight or more of the total amount of 8-membered oxygen ring zeolite including the metal element other than Al or Si added to or loaded on the zeolite. The amount of metal element other than Al or Si included in or loaded on the zeolite is normally 20% by weight or less, is preferably 10% by weight or less, and is more preferably 8% by weight or less of the total amount of 8-membered oxygen ring zeolite including the metal element other than Al or Si added to or loaded on the zeolite.

The exhaust gas may include components other than nitrogen oxide, such as hydrocarbon, carbon monoxide, carbon dioxide, hydrogen, nitrogen, oxygen, sulfur oxides, and water. Publicly known reductants, such as hydrocarbon and nitrogen-containing compounds (e.g., ammonia, and urea), may also be used.

Specifically, a catalyst for treating exhaust gas which is produced using the 8-membered oxygen ring zeolite according to the present invention can be used for removing nitrogen oxide contained in various types of exhaust gases from various diesel engines for diesel automobiles, gasoline automobiles, stationary power generation, shipping, agricultural machines, construction machines, two-wheel vehicles, and aircraft, boilers, gas turbines, and the like.

The 8-membered oxygen ring zeolite according to the present invention may be used in an application other than a catalyst for the removal of nitrogen oxide. For example, the 8-membered oxygen ring zeolite according to the present invention may be used as an oxidation catalyst for oxidizing an excess reductant (e.g., ammonia) that has not been consumed for removing nitrogen oxide in a step subsequent to the step in which nitrogen oxide is removed using a catalyst for removing nitrogen oxide which includes the 8-membered oxygen ring zeolite according to the present invention. The catalyst including the 8-membered oxygen ring zeolite according to the present invention serves as an oxidation catalyst, oxidizes the excess reductant, and reduces the amount of reductant contained in the exhaust gas. In such a case, a catalyst produced by loading a metal such as a platinum group on a carrier composed of a zeolite or the like to which the reductant is adsorbed can be used as an oxidation catalyst. The 8-membered oxygen ring zeolite according to the present invention may be used as the carrier. The 8-membered oxygen ring zeolite according to the present invention may also be used as a catalyst for selective reduction of nitrogen oxide. For example, a catalyst produced by further loading the metal such as a platinum group on the 8-membered oxygen ring zeolite according to the present invention on which iron and/or copper is loaded may be used.

The catalyst including the 8-membered oxygen ring zeolite according to the present invention can be used in various exhaust gas purification systems. Examples of the systems include an exhaust gas purification system that includes a selective reduction nitrogen oxide removal catalyst including the catalyst according to the present invention. In the exhaust gas purification system, an ammonia oxidation catalyst may be disposed downstream of the selective reduction nitrogen oxide removal catalyst.

The catalyst including the 8-membered oxygen ring zeolite according to the present invention may be used in various exhaust gas purification methods. The exhaust gas purification methods are exhaust gas purification methods that include a step in which ammonia is adsorbed on a selective reduction nitrogen oxide removal catalyst and nitrogen oxide is selectively reduced by using the adsorbed ammonia as a reductant. The selective reduction nitrogen oxide removal catalyst is preferably the catalyst including the 8-membered oxygen ring zeolite according to the present invention. The exhaust gas purification method may optionally include a step in which the excess ammonia is oxidized subsequent to the step in which nitrogen oxide is selectively reduced by using the ammonia as a reductant.

The ammonia may be introduced from the outside into the exhaust gas purification system or synthesized from urea introduced from the outside into the exhaust gas purification system. Alternatively, the ammonia may be produced from an exhaust gas inside the exhaust gas purification system.

The conditions under which the catalyst including the 8-membered oxygen ring zeolite according to the present invention is brought into contact with an exhaust gas when the catalyst is used are not limited. The space velocity of the exhaust gas is normally 100 /h or more, is preferably 1000 /h or more, and is further preferably 5000 /h or more. The space velocity of the exhaust gas is normally 500000 /h or less, is preferably 400000 /h or less, and is further preferably 200000 /h or less. The temperature at which the catalyst is brought into contact with an exhaust gas is normally 100°C or more, is more preferably 125°C or more, and is further preferably 150°C or more. The contact temperature is normally 1000°C or less, is preferably 800°C or less, is further preferably 600°C or less, and is particularly preferably 500°C or less.

[Method for Producing CHA-Type Zeolite]

A method for producing a CHA-type zeolite according to the present invention includes mixing an aluminum atom raw material, a silicon atom raw material, an alkali-metal atom raw material, an organic structure-directing agent, and water with one another in order to prepare a mixture and producing a CHA-type zeolite from the mixture by hydrothermal synthesis. A reactant mixture is prepared using the aluminum atom raw material including at least an aluminosilicate zeolite having a framework including a composite building unit d6r defined by International Zeolite Association (IZA), the silicon atom raw material including at least the aluminosilicate zeolite and a silicon atom raw material other than the aluminosilicate zeolite, and the organic structure-directing agent including at least a quaternary ammonium salt including 5 to 11 carbon atoms per molecule. Subsequently, hydrothermal synthesis is performed.

<Aluminum Atom Raw Material>

One of the features of the method for producing a CHA-type zeolite according to the present invention is to use an aluminum atom raw material that includes at least an aluminosilicate zeolite having a framework including a composite building unit d6r defined by International Zeolite Association (IZA). The aluminosilicate zeolite having a framework including d6r is the same as the aluminosilicate zeolite used in the method for producing an 8-membered oxygen ring zeolite which is described above.

The conditions described in the foregoing section "Method for Producing 8-Membered Oxygen Ring Zeolite" apply to the method for producing a CHA-type zeolite according to the present invention, except that the condition that the Framework density of the aluminosilicate zeolite having a framework including d6r is 15 T/1000Å or less can be omitted. The application of the CHA-type zeolite and the method for producing the CHA-type zeolite are also the same as in the foregoing section. The preferable particle size, preferable surface area, and the like of the CHA-type zeolite are also the same as those of the 8-membered oxygen ring zeolite according to the present invention.

The CHA-type zeolite produced by the production method can be used as a catalyst similarly to the 8-membered oxygen ring zeolite according to the present invention and suitably used as a catalyst for treating exhaust gases similarly to the 8-membered oxygen ring zeolite according to the present invention.

[Method for Producing AEI-Type Zeolite]

A method for producing an AEI-type zeolite according to the present invention includes mixing a zeolite framework-forming atom raw material, an alkali-metal atom raw material, an organic structure-directing agent, and water with one another in order to prepare a raw material mixture and producing an AEI-type zeolite from the raw material mixture by hydrothermal synthesis. The zeolite framework-forming atom raw material includes at least an aluminosilicate zeolite having a framework including a composite building unit d6r defined by International Zeolite Association (IZA). The organic structure-directing agent includes at least a quaternary alkyl ammonium salt including 5 to 11 carbon atoms per molecule. An AEI-type zeolite that serves as a seed crystal is mixed with the raw material mixture in an amount equal to 0.5% by weight or more of the amount of $SiO_2$ that is to be included in the raw material mixture when all the Si atoms included in the raw material mixture are replaced with $SiO_2$ in order to prepare a reactant mixture. The reactant mixture is subjected to hydrothermal synthesis.

The AEI-type zeolite produced in the present invention (hereinafter, may be referred to as "AEI-type zeolite according to the present invention") is a zeolite having an AEI structure, which is a code defined by International Zeolite Association (IZA) to specify the structure of the zeolite. The structure of a zeolite is identified from the data obtained by X-ray diffraction. However, in the measurement of actual zeolites, peak intensity ratios and peak positions slightly shift under the influence of the growth direction of the zeolites, the ratios of constitutional elements, the substances adsorbed, the presence of defects, the degree of dryness, and the like. Accordingly, values completely the same as the parameters of the AEI structure described in the IZA specifications are not always measured actually; a deviation of about 10% is acceptable.

The zeolite is a zeolite defined by International Zeolite Association (IZA) and is preferably an aluminosilicate zeolite. An aluminosilicate zeolite has a framework structure constituted by at least oxygen, aluminum (Al), and silicon (Si) atoms. Some of the above atoms may be replaced with another atom (Me).

The compositional proportions (molar ratios) of Me, Al, and Si constituting the framework structure of the aluminosilicate zeolite included in the AEI-type zeolite are not limited. When the molar ratios of Me, Al, and Si to the total amount of Me, Al, and Si are represented by x, y, and z, respectively, x is normally 0 or more and 0.3 or less. If x is larger than the upper limit, the likelihood of impurities mixing into the zeolite during synthesis is high.

The molar ratio y is normally 0.001 or more, is preferably 0.005 or more, is more preferably 0.01 or more, and is further preferably 0.05 or more. The molar ratio y is normally 0.5 or less, is preferably 0.4 or less, is more preferably 0.3 or less, and is further preferably 0.25 or less.

The molar ratio z is normally 0.5 or more, is preferably 0.6 or more, is more preferably 0.7 or more, and is further preferably 0.75 or more. The molar ratio z is normally 0.999 or less, is preferably 0.995 or less, is more preferably 0.99 or less, and is further preferably 0.95 or less.

If y and z are outside the above ranges, it may be difficult to synthesis the zeolite. In addition, if such a zeolite is used as a catalyst, the zeolite may fail to exhibit activity because the number of acid sites is considerably small.

The number of types of the other atom Me may be one or two or more. The other atom Me is preferably an element belonging to Period 3 or 4 of the periodic table.

<Aluminosilicate Zeolite Used for Producing AEI-Type Zeolite>

One of the features of the method for producing an AEI-type zeolite according to the present invention is to use an aluminosilicate zeolite having a framework including a composite building unit d6r defined by International Zeolite Association (IZA) as a zeolite framework-forming atom raw material, that is, an aluminum atom raw material and a silicon atom raw material.

The Framework density of the aluminosilicate zeolite used in the present invention, which has a framework including a composite building unit d6r defined by International Zeolite Association (IZA), is preferably 14.5 $T/1000Å^3$ or less. Framework density is the value determined by Ch. Baerlocher, et al. and described in ATLAS OF ZEOLITE FRAME WORK TYPES (Sixth Revised Edition, 2007, ELSEVIER) and represents framework density.

The term "Framework density" refers to the number of T atoms (atoms other than oxygen atoms which constitute the framework structure of the zeolite) included in the unit volume ($1000 Å^3$) of the zeolite. This value is determined by the composition of the zeolite.

The advantageous effects of using the aluminosilicate zeolite having a framework density of 14.5 $T/1000Å^3$ or less as a framework atom raw material in the process for producing an AEI-type zeolite have not been clarified in detail but are presumably as follows.

A zeolite having a framework density of 14.5 $T/1000Å^3$ or less, that is, a relatively low framework density, has high solubility and therefore easily becomes decomposed into d6r that constitutes the framework or into nanoparts that constitute d6r. The decomposed parts again form a crystal structure in the vicinity of the seed crystal so as to surround the organic structure-directing agent. Thus, an AEI-type zeolite is formed.

In consideration of ease of decomposition of the aluminosilicate zeolite into the nanoparts in alkali, the Framework density of the zeolite is preferably 14.5 $T/1000Å^3$ or less, is more preferably 14.3 $T/1000Å^3$ or less, is further preferably 14.1 $T/1000Å^3$ or less, is particularly preferably 14.0 $T/1000Å^3$ or less, and is most preferably 13.5 $T/1000Å^3$ or less. Since an aluminosilicate zeolite having an excessively small Framework density may excessively dissolve and fail to serve as the nanoparts, the framework density of the aluminosilicate zeolite is preferably 10 $T/1000Å^3$ or more, is more preferably 10.5 $T/1000Å^3$ or more, is further preferably 10.6 $T/1000Å^3$ or more, and is particularly preferably 10.8 $T/1000Å^3$ or more.

Specific examples of the aluminosilicate zeolite used in the present invention include CHA, EMT, FAU, SAV, SBS, SBT, and TSC. CHA, EMT, FAU, and SAV are more preferable. CHA and FAU are further preferable. An FAU-type zeolite (Y-type zeolite) is particularly preferable.

The silica ($SiO_2$)/alumina ($Al_2O_3$) molar ratio of the aluminosilicate zeolite is preferably 3 to 100. Setting the ratio to be smaller than the above upper limit prevents an excessive increase in the solubility of the zeolite in a basic solution. An aluminosilicate zeolite having a silica/alumina molar ratio of 30 or less or, in particular, 15 or less is inexpensive and easily available industrially. The lower limit for the silica/alumina molar ratio of the aluminosilicate zeolite is preferably 1 or more and is particularly preferably 3 or more in consideration of the solubility of the aluminosilicate zeolite.

For the same reasons as described above, the silica ($SiO_2$) /alumina ($Al_2O_3$) molar ratio of the aluminosilicate zeolite is preferably 3 or more and 20 or less, is more preferably 5 or more and 20 or less, and is most preferably 5 or more and 15 or less.

Only one type of aluminosilicate zeolite may be used alone. Alternatively, two or more types of aluminosilicate zeolites may be used in a mixture.

The aluminosilicate zeolite is used such that the total amount of the aluminosilicate zeolite, the aluminum atom raw material and/or the silicon atom raw material other than the aluminosilicate zeolite, which is used as needed depending on the Al and Si contents in the AEI-type zeolite that is to be produced, is equal to the amounts of the aluminum atom raw material and the silicon atom raw material used which are described below. In the present invention, the amount of the specific aluminosilicate zeolite described above is preferably 50% by weight or more, is particularly preferably 60% to 100% by weight, and is further preferably 80% to 100% by weight of the total amount of aluminum atom raw materials in order to achieve the advantageous effects of the present invention with effect by using the specific aluminosilicate zeolite described above. The amount of the specific aluminosilicate zeolite described above is preferably 50% by weight or more, is particularly preferably 60% to 100% by weight, and is further preferably 80% to 100% by weight of the total amount of silicon atom raw materials.

<Seed Crystal>

The AEI-type zeolite used as a seed crystal is desirably a zeolite having the same structure as the zeolite that is to be produced.

The average particle size of the AEI-type zeolite used as a seed crystal is preferably 0.01 to 5.0 $\mu$m and is particularly preferably 0.5 to 3.0 $\mu$m. Setting the particle size of the seed crystal to be smaller than the above upper limit may reduce the amount of production time. Setting the particle size of the seed crystal to be larger than the above lower limit increases ease of handling.

The amount of seed crystal used is 0.5% by weight or more in terms of proportion to $SiO_2$ equivalent. The amount of seed crystal used is preferably 1% by weight or more, is more preferably 2% by weight or more, is further preferably 3% by weight or more, and is particularly preferably 4% by weight or more in order to facilitate the reaction. Although the upper limit for the amount of seed crystal used is not limited, the amount of seed crystal used is normally 30% by weight or less, is preferably 25% by weight or less, is more preferably 22% by weight or less, and is further preferably 20% by weight or less in terms of proportion to $SiO_2$ equivalent in order to reduce the production costs to a sufficient degree.

The AEI-type zeolite used as a seed crystal may be a non-calcinated product that has not been calcinated after hydrothermal synthesis or a calcinated product that has been calcinated after hydrothermal synthesis. In the case where hydrothermal synthesis is performed under a high-temperature, high-alkaline condition under which the seed crystal zeolite is likely to dissolve, it is preferable to use a non-calcinated product, which is less likely to dissolve. In the case where hydrothermal synthesis is performed under a low-temperature, low-alkaline condition under which the seed crystal zeolite is less likely to dissolve, it is preferable to use a calcinated product, which is likely to dissolve.

There have been commonly proposed a technique for producing a zeolite in which a seed crystal is used for increasing the yield of the zeolite. In the present invention, a desired zeolite can be produced by adding a specific zeolite to a material from which the desired zeolite cannot be produced. This advantageous effect is different from the seed crystal effect used in the related art. In particular, in the method for producing an AEI-type zeolite according to the present invention, a CHA-type or BEA-type zeolite may be formed when the predetermined organic structure-directing agent is used without the seed crystal. The addition of the seed crystal plays an important role for producing an AEI-type zeolite.

<Aluminum Atom Raw Material>

In the present invention, an aluminum atom raw material other than the specific aluminosilicate zeolite described above may be used in order to adjust the composition of the reactant mixture. The aluminum atom raw material other than the aluminosilicate zeolite is not limited; publicly known, various substances may be used. Examples thereof include amorphous aluminum hydroxide, aluminum hydroxide having a gibbsite structure, aluminum hydroxide having a bayerite structure, aluminum nitrate, aluminum sulfate, aluminum oxide, sodium aluminate, boehmite, pseudo boehmite, and an aluminum alkoxide. An aluminosilicate gel, which is described below as an example of the silicon atom raw material, may also be used as an aluminum atom raw material. The above aluminum atom raw materials may be used alone or in a mixture of two or more.

The amount of aluminum atom raw material (including the specific aluminosilicate zeolite described above) used is normally 0.02 or more, is preferably 0.04 or more, is more preferably 0.06 or more, and is further preferably 0.08 or more in terms of the molar ratio of aluminum (Al) included in the aluminum atom raw material to silicon (Si) included in the raw material mixture that does not include the seed crystal in consideration of ease of preparation of the reactant mixture and production efficiency. Although the upper limit for the amount of aluminum atom raw material used is not specified, the above molar ratio is normally 2 or less, is preferably 1 or less, is more preferably 0.4 or less, and is further preferably 0.2 or less in order to uniformly dissolve the aluminum atom raw material in the reactant mixture.

In the case where an aluminum atom raw material other than the specific aluminosilicate zeolite described above is used in combination, the amount of the specific aluminosilicate zeolite described above is preferably 50% by weight or more, is particularly preferably 60% to 100% by weight, and is further preferably 80% to 100% by weight of the total amount of the aluminum atom raw materials in order to achieve the advantageous effects of the present invention with effect by using the specific aluminosilicate zeolite described above.

<Silicon Atom Raw Material>

In the present invention, a silicon atom raw material other than the specific aluminosilicate zeolite described above is used in order to adjust the composition of the reactant mixture. The silicon atom raw material other than the aluminosilicate zeolite is not limited; publicly known, various substances may be used. Examples thereof include fumed silica, colloidal silica, non-crystalline silica, sodium silicate, methyl silicate, ethyl silicate, silicon alkoxide, such as trimethylethoxysilane, tetraethyl orthosilicate, and aluminosilicate gel. Fumed silica, colloidal silica, non-crystalline silica, sodium silicate, methyl silicate, ethyl silicate, silicon alkoxide, and aluminosilicate gel are preferable. The above silicon atom raw materials may be used alone or in a mixture of two or more.

<Alkali-Metal Atom Raw Material>

The alkali metal atom included in the alkali-metal atom raw material used in the present invention is not limited; publicly known alkali metal atoms used for the synthesis of a zeolite may be used. It is preferable to perform crystallization in the presence of at least one alkali metal ion selected from the group consisting of lithium, sodium, potassium, rubidium, and cesium. Among the above alkali metal atoms, sodium and potassium are preferable, and sodium is particularly preferable. When the alkali-metal atom raw material includes the above alkali metal atoms, crystallization may be facilitated. In addition, the formation of the by-product (impurity crystal) may be reduced.

The alkali-metal atom raw material may be an inorganic acid salt of the above alkali metal atom, such as a hydroxide, an oxide, a sulfate, a nitrate, a phosphate, a chloride, or a bromide, or an organic acid salt of the above alkali metal atom, such as an acetate, an oxalate, or a citrate. The above alkali-metal atom raw materials may be used alone or in a mixture of two or more.

The molar ratio of the amount of alkali-metal atom raw material used to the amount of silicon (Si) included in the raw material mixture, which does not include the seed crystal added in the present invention, is preferably 0.1 or more and 0.8 or less, since using an adequate amount of alkali-metal atom raw material increases the likelihood of the organic structure-directing agent described below coordinating to aluminum in a suitable state and thereby facilitates the formation of the crystal structure. The above molar ratio is more preferably 0.13 or more, is further preferably 0.15 or more, is particularly preferably 0.18 or more, and is most preferably 0.2 or more. The above molar ratio is more preferably 0.8 or less, is further preferably 0.7 or less, is particularly preferably 0.6 or less, and is most preferably 0.5 or less.

<Organic Structure-Directing Agent>

Examples of the organic structure-directing agent (also referred to as "template"; hereinafter, the organic structure-directing agent may be referred to as "SDA") include a quaternary ammonium salt, an amine, and an imine. It is preferable to use the compound (1) below or at least one compound selected from the group consisting of (2a) to (2c) below. Since the above compounds are easily available and inexpensive, they are suitably used in order to reduce the production costs. Among them, quaternay alkyl ammonium salt that is one of below (1) is preferable.

(1) Quaternary ammonium salt including 5 to 11 carbon atoms per molecule
(2a) Alicyclic heterocyclic compound including a hetero atom that is a nitrogen atom
(2b) Amine including an alkyl group (alkylamine)
(2c) Amine including a cycloalkyl group (cycloalkylamine)

(1) Quaternary ammonium salt including 5 to 11 carbon atoms per molecule

The molecular weight of the quaternary ammonium salt including 5 to 11 carbon atoms per molecule is normally 300 or less, is preferably 250 or less, and is more preferably 100 or more and 200 or less. Examples of the quaternary ammonium salt including 5 to 11 carbon atoms per molecule include tetraethylammonium hydroxide and triethylmethylammonium hydroxide. Tetraethylammonium hydroxide is preferable since it is easily available industrially. The above quaternary ammonium salts including 5 to 11 carbon atoms per molecule may be used alone or in a mixture of two or more.

(2a) Alicyclic heterocyclic compound containing a nitrogen atom as a heteroatom

The heterocyclic ring of the alicyclic heterocyclic compound containing a nitrogen atom as a hetero atom is usually a 5- to 7-membered ring, preferably a 6-membered ring. The number of hetero atoms contained in the heterocyclic ring is usually 3 or less, preferably 2 or less. A hetero atom other than a nitrogen atom is arbitrary, but one containing an oxygen atom in addition to a nitrogen atom is preferable. The position of the heteroatom is not particularly limited, but it is preferable that the heteroatom is not adjacent.

The molecular weight of the alicyclic heterocyclic compound containing a nitrogen atom as a heteroatom is usually 250 or less, preferably 200 or less, more preferably 150 or less, usually 30 or more, preferably 40 or more, further preferably 50 or more.

Examples of alicyclic heterocyclic compounds containing a nitrogen atom as a heteroatom include morpholine, N-methylmorpholine, piperidine, piperazine, N, N'-dimethylpiperazine, 1,4-diazabicyclo (2,2,2) octane, N-methylpiperidine, 3-methylpiperidine, quinuclidine, pyrrolidine, N-methylpyrrolidone, hexamethyleneimine and the like. One of these may be used alone, or two or more of them may be mixed and used. Among them, morpholine, hexamethyleneimine, piperidine are preferable, and morpholine is particularly preferable.

(2b) Alkylamine

The alkyl group of the alkylamine is usually a chain alkyl group. The number of alkyl groups contained in one molecule of the alkylamine is not particularly limited, but is preferably 3. The alkyl group of the alkylamine may partially have a substituent such as a hydroxyl group. The number of carbon atoms of the alkyl group of the alkylamine is preferably 4 or less, and the total number of carbon atoms of all alkyl groups in one molecule is more preferably 5 or more and 30 or less.

The molecular weight of the alkylamine is usually 250 or less, preferably 200 or less, more preferably 150 or less.

Examples of the alkylamine include di-n-propylamine, tri-n-propylamine, tri-isopropylamine, triethylamine, triethanolamine, N, N-diethylethanolamine, N, N-dimethylethanolamine, N-methyldiethanolamine, N-methylethanolamine, di-n-butylamine, neopentylamine, di-n-pentylamine, isopropylamine, t-butylamine, ethylenediamine, di-isopropyl- ethylamine, N-methyl-n-butylamine and the like. One of these may be used alone, or two or more of them may be mixed and used. Among them, di-n-propylamine, tri-n-propylamine, tri-isopropylamine, triethylamine, di-n-butylamine, isopropylamine, t-butylamine, ethylenediamine, di-isopropyl-ethylamine, N-methyl-n-butylamine is preferable, and triethylamine is particularly preferable.

(2c) Cycloalkylamine

As the cycloalkylamine, those having an alkyl group with 4 to 10 carbon atoms are preferable, and among them, cyclohexylamine is preferable. One kind of cycloalkyl amine may be used alone, or two or more kinds may be used in admixture.

These organic structure directing agents may be used singly or in combination of two or more kinds. In the process for producing the AEI type zeolite of the present invention, it is preferable that among the above organic structure directing agents, at least a quaternary alkylammonium salt having 5 to 11 carbon atoms in one molecule, preferably tetraethylammonium hydroxide is used.

The molar ratio of the amount of organic structure-directing agent used to the amount of silicon (Si) included in the raw material mixture, which does not include the seed crystal, is normally 0.05 or more, is preferably 0.1 or more, is more preferably 0.15 or more, and is further preferably 0.2 or more in consideration of ease of formation of crystals. The above molar ratio of the amount of organic structure-directing agent used is normally 1 or less, is preferably 0.8 or less, is more preferably 0.6 or less, and is further preferably 0.5 or less in order to reduce the costs to a sufficient degree.

<Water>

The molar ratio of the amount of water used to the amount of silicon (Si) included in the raw material mixture, which does not include the seed crystal, is normally 3 or more, is preferably 5 or more, is more preferably 8 or more, and is further preferably 10 or more in consideration of ease of formation of crystals. The above molar ratio of the amount of water used is normally 50 or less, is preferably 40 or less, is more preferably 30 or less, and is further preferably 25 or less in order to reduce the costs of liquid waste treatment to a sufficient degree.

<Mixing of Raw Materials (Preparation of Reactant Mixture)>

In the production method according to the present invention, the aluminosilicate zeolite, the aluminum atom raw material and/or silicon atom raw material other than the aluminosilicate zeolite, which is used as needed, the alkali-metal atom raw material, the organic structure-directing agent, and water are mixed with one another in order to prepare a raw material mixture. The raw material mixture is mixed with a desired AEI-type zeolite, which serves as a seed crystal, to a sufficient degree. The resulting reactant mixture is subjected to hydrothermal synthesis.

The order in which the raw materials are mixed with one another is not limited; it is preferable to add the aluminosilicate zeolite after an alkaline solution has been prepared in order to dissolve the raw materials further uniformly. That is, it is preferable to mix water, the organic structure-directing agent, and the alkali-metal atom raw material with one another in order to prepare an alkaline solution and subsequently add the optional silicon atom raw material and/or aluminum atom raw material, the aluminosilicate zeolite, the AEI-type zeolite to the alkaline solution in this order.

In the present invention, in addition to the aluminosilicate zeolite, the aluminum atom raw material, the silicon atom raw material, the alkali-metal atom raw material, the organic structure-directing agent, water, and the AEI-type zeolite, which serves as a seed crystal, other additives such as a catalyst and an adjuvant may be added as needed in any step in order to prepare the reactant mixture.

<Aging>

The reactant mixture prepared in the above manner may be subjected to hydrothermal synthesis immediately after preparation and is preferably aged for a predetermined amount of time at predetermined temperatures in order to produce a zeolite with high crystallinity. In particular, when scale-up is performed, miscibility may become degraded and the raw materials may fail to be mixed sufficiently. Accordingly, aging the raw materials for a predetermined amount of time while stirring the raw materials enables the raw materials to be mixed further uniformly. The aging temperature is normally 100°C or less, is preferably 80°C or less, and is more preferably 60°C or less. Although the lower limit for the aging temperature is not specified, the aging temperature is normally 0°C or more and is preferably 10°C or more. During aging, the aging temperature may be maintained to be constant or changed in a stepwise or continuous manner. The amount of aging time is not limited. The amount of aging time is normally 2 hours or more, is preferably 3 hours or more, and is more preferably 5 hours or more. The amount of aging time is normally 30 days or less, is preferably 10 days or less, and is further preferably 4 days or less.

<Hydrothermal Synthesis>

Hydrothermal synthesis is performed by charging the reactant mixture prepared in the above-described manner or an aqueous gel prepared by aging the reactant mixture into a pressure-resistant container and maintaining a predetermined temperature at an auto-generated pressure or a gas-increased pressure that does not inhibit crystallization while performing stirring, rotating or shaking the container, or leaving the container to stand.

The reaction temperature for hydrothermal synthesis is normally 120°C or more and 230°C or less, is preferably 220°C or less, is more preferably 200°C or less, and is further preferably 190°C or less. The amount of reaction time is not limited. The amount of reaction time is normally 2 hours or more, is preferably 3 hours or more, and is more preferably 5 hours or more. The amount of reaction time is normally 30 days or less, is preferably 10 days or less, is more preferably 7 days or less, and is further preferably 5 days or less. During the reaction, the reaction temperature may be maintained to be constant or changed in a stepwise or continuous manner.

Conducting the reaction under the above conditions reduces the formation of a zeolite other than the desired AEI-type zeolite and enables the desired AEI-type zeolite to be produced at a high yield.

<Recovery of AEI-Type Zeolite>

Subsequent to the hydrothermal synthesis described above, the product, that is, an AEI-type zeolite, is separated from the hydrothermal synthesis reaction liquid.

The zeolite (hereinafter, referred to as "SDA and the like-containing zeolite") includes both or either of the organic structure-directing agent and the alkali metal contained in the pores. The method for separating the SDA and the like-containing zeolite from the hydrothermal synthesis reaction liquid is not limited; normally, filtration, decantation, direct drying, and the like are used.

The SDA and the like-containing zeolite separated and recovered from the hydrothermal synthesis reaction liquid may optionally be cleaned with water, dried, and subsequently, for example, calcinated in order to remove the organic structure-directing agent and the like used in the production of the zeolite. Thus, a zeolite that does not include the organic structure-directing agent or the like can be produced.

In the case where the AEI-type zeolite according to the present invention is used as a catalyst (including a catalyst carrier), an adsorbent, or the like, the above components are removed as needed before use.

For removing both or either of the organic structure-directing agent and the alkali metal from the SDA and the like-containing zeolite, a liquid phase treatment using an acidic solution or a chemical solution containing a constituent capable of decomposing the organic structure-directing agent, an ion-exchange treatment using a resin or the like, and a thermal decomposition treatment may be employed. The above treatments may be performed in combination. The organic structure-directing agent and the like included in the SDA and the like-containing zeolite can be removed normally by, for example, calcinating the SDA and the like-containing zeolite at 300°C to 1000°C in air, an oxygen-containing inert gas, or an inert gas atmosphere or by performing extraction with an organic solvent such as an aqueous ethanol solution. It is preferable to remove the organic structure-directing agent and the like by calcinating in consideration of productivity. In such a case, the calcinating temperature is preferably 400°C or more, is more preferably 450°C or more, and is further preferably 500°C or more. The calcinating temperature is preferably 900°C or less, is more preferably 850°C or less, and is further preferably 800°C or less. Examples of the inert gas include nitrogen.

Similarly to the 8-membered oxygen ring zeolite according to the present invention, in the case where the AEI-type zeolite according to the present invention is used particularly as an SCR catalyst, the Si/Al ratio of the AEI-type zeolite according to the present invention is preferably 2 or more and 50 or less, is more preferably 3 or more and 40 or less, is further preferably 4 or more and 35 or less, and is particularly preferably 4.5 or more and 30 or less in order to achieve high resistance to high-temperature water vapor.

The average particle size of the AEI-type zeolite according to the present invention is not limited and is preferably 0.1 to 10 $\mu$m, is more preferably 0.2 to 8 $\mu$m, and is further preferably 0.5 to 5 $\mu$m in order to enhance the gas diffusibility of the zeolite used as a catalyst.

The specific surface area of the AEI-type zeolite according to the present invention is not limited and is preferably 300 to 1000 $m^2$/g, is more preferably 400 to 800 $m^2$/g, and is further preferably 500 to 750 $m^2$/g in order to increase the number of active sites present in the surfaces of the pores.

The ion-exchange capacity of the zeolite is described below.

Ion-exchange capacity may also be achieved by replacing an alkali metal portion resulting from the alkali-metal atom raw material or alkali atoms included in the zeolite framework-forming atom raw material, the organic structure-directing agent, or the seed crystal zeolite, with hydrogen (H type) or ammonium ($NH_4$ type). In such a case, any publicly known technique may be employed. For example, the zeolite is treated using an ammonium salt, such as $NH_4NO_3$, or an acid, such as hydrochloric acid, normally at room temperature to 100°C, and subsequently cleaned with water.

<Application of AEI-type Zeolite>

The application of the AEI-type zeolite according to the present invention is not limited. The AEI-type zeolite according to the present invention is suitably used as a catalyst, an adsorbent, a separation material, or the like. As described in PTL 1 above, the zeolite is particularly suitably used as, for example, a catalyst for purifying an exhaust gas from automobiles or the like. Alternatively, the zeolite may be used as a NOx direct denitration catalyst or a petrochemical catalyst. Examples of the petrochemical catalyst include a catalyst used for synthesizing an olefin from methanol and a catalyst used for synthesizing propylene from ethylene.

<Catalyst for Treating Exhaust Gas>

In the case where the AEI-type zeolite according to the present invention is used as a catalyst for treating an exhaust gas, such as an automotive exhaust gas purification catalyst, the AEI-type zeolite according to the present invention may be used directly. Alternatively, a metal may be added to the AEI-type zeolite as needed. Specific examples of the method for adding a metal to the zeolite include impregnation, liquid-phase ion exchange, and solid-phase ion exchange. In another case, a zeolite including a metal can be directly synthesized by adding the metal prior to the hydrothermal synthesis reaction. The state of the metal included in the zeolite including a metal is classified into two types: the case where the metal is included in the framework structure and the case where the metal is not included in the framework structure.

The catalyst including the AEI-type zeolite according to the present invention may be mixed with a binder and formed into a granular shape or formed into a predetermined shape, such as a honeycomb shape. For example, the catalyst is mixed with an inorganic binder, such as silica, alumina, or clay mineral, or inorganic fibers, such as alumina fibers or glass fibers. The resulting mixture is formed into a granular shape or a predetermined shape, such as a honeycomb shape, by extrusion, compression, or the like and subsequently calcinated. Hereby, a particulate catalyst, a honeycomb catalyst, or a catalyst shaped product can be produced.

The catalyst including the AEI-type zeolite according to the present invention may be applied to a base material, such as a sheet or a honeycomb. For example, a catalyst including the AEI-type zeolite according to the present invention is mixed with an inorganic binder, such as silica, alumina, or clay mineral, to form a slurry. The slurry is applied onto the surface of a base material composed of an inorganic substance, such as cordierite, and then calcinated. It is preferable to apply the slurry to a base material having a honeycomb shape in order to prepare a honeycomb catalyst having a honeycomb shape on which the catalyst is loaded.

Although an inorganic binder is used in the above example since a catalyst for treating exhaust gas is described as an example, an organic binder may be used instead depending on the application or the conditions under which the catalyst is used.

The catalyst according to the present invention which includes the AEI-type zeolite according to the present invention is effectively used as a NOx selective reduction catalyst, such as an automotive exhaust gas purification catalyst, which is brought into contact with an exhaust gas containing nitrogen oxide in order to remove nitrogen oxide.

A catalyst for treating exhaust gas which is produced by adding a metal other than Al or Si to the AEI-type zeolite according to the present invention or loading the metal on the AEI-type zeolite is particularly effectively used as a NOx selective reduction catalyst. The metal element added to or loaded on the AEI-type zeolite as a catalyst for treating exhaust gas is preferably a transition metal. Specific examples thereof include iron, cobalt, palladium, iridium, platinum, copper, silver, gold, cerium, lanthanum, praseodymium, titanium, and zirconium. The metal element added to or loaded on the AEI-type zeolite is further preferably iron and/or copper. Two or more metals may be added to or loaded on the AEI-type zeolite in combination. The amount of metal element other than Al or Si included in or loaded on the zeolite is normally 0.1% by weight or more, is preferably 0.3% by weight or more, is more preferably 0.5% by weight or more, and is particularly preferably 1.0% by weight or more of the total amount of AEI-type zeolite including the metal element other than Al or Si added to or loaded on the zeolite. The amount of metal element other than Al or Si included in or loaded on the zeolite is normally 20% by weight or less, is preferably 10% by weight or less, and is more preferably 8% by weight or less of the total amount of AEI-type zeolite including the metal element other than Al or Si added to or loaded on the zeolite.

The exhaust gas may include components other than nitrogen oxide, such as hydrocarbon, carbon monoxide, carbon dioxide, hydrogen, nitrogen, oxygen, sulfur oxides, and water. Publicly known reductants, such as hydrocarbon and nitrogen-containing compounds (e.g., ammonia, and urea), may also be used.

Specifically, a catalyst for treating exhaust gas which is produced using the 8-membered oxygen ring zeolite according to the present invention can be used for removing nitrogen oxide contained in various types of exhaust gases from various diesel engines for diesel automobiles, gasoline automobiles, stationary power generation, shipping, agricultural machines, construction machines, two-wheel vehicles, and aircraft, boilers, gas turbines, and the like.

The AEI-type zeolite according to the present invention may be used in an application other than a catalyst for the removal of nitrogen oxide. For example, the AEI-type zeolite according to the present invention may be used as an oxidation catalyst for oxidizing an excess reductant (e.g., ammonia) that has not been consumed for removing nitrogen oxide in a step subsequent to the step in which nitrogen oxide is removed using a catalyst for removing nitrogen oxide which includes the AEI-type zeolite according to the present invention. The catalyst including the AEI-type zeolite according to the present invention serves as an oxidation catalyst, oxidizes the excess reductant, and reduces the amount of reductant contained in the exhaust gas. In such a case, a catalyst produced by loading a metal such as a platinum group on a carrier composed of a zeolite or the like to which the reductant is adsorbed can be used as an oxidation catalyst. The AEI-type zeolite according to the present invention may be used as the carrier. The AEI-type zeolite according to the present invention may also be used as a catalyst for selective reduction of nitrogen oxide. For example, a catalyst produced by further loading the metal such as a platinum group on the AEI-type zeolite according to the present invention on which iron and/or copper is loaded may be used.

The catalyst including the AEI-type zeolite according to the present invention can be used in various exhaust gas purification systems. Examples of the systems include an exhaust gas purification system that includes a selective reduction nitrogen oxide removal catalyst including the catalyst according to the present invention. In the exhaust gas purification system, an ammonia oxidation catalyst may be disposed downstream of the selective reduction nitrogen oxide removal catalyst.

The catalyst including the AEI-type zeolite according to the present invention may be used in various exhaust gas purification methods. The exhaust gas purification methods are exhaust gas purification methods that include a step in which ammonia is adsorbed on a selective reduction nitrogen oxide removal catalyst and nitrogen oxide is selectively reduced by using the adsorbed ammonia as a reductant. The selective reduction nitrogen oxide removal catalyst is preferably the catalyst including the AEI zeolite according to the present invention. The exhaust gas purification method may optionally include a step in which the excess ammonia is oxidized subsequent to the step in which nitrogen oxide is selectively reduced by using the ammonia as a reductant.

The ammonia may be introduced from the outside into the exhaust gas purification system or synthesized from urea introduced from the outside into the exhaust gas purification system. Alternatively, the ammonia may be produced from an exhaust gas inside the exhaust gas purification system.

The conditions under which the catalyst including the AEI-type zeolite according to the present invention is brought into contact with an exhaust gas when the catalyst is used are not limited. The space velocity of the exhaust gas is normally 100 /h or more, is preferably 1000 /h or more, and is further preferably 5000 /h or more. The space velocity of the exhaust gas is normally 500000 /h or less, is preferably 400000 /h or less, and is further preferably 200000 /h or less. The temperature at which the catalyst is brought into contact with an exhaust gas is normally 100°C or more, is more preferably 125°C or more, and is further preferably 150°C or more. The contact temperature is normally 1000°C or less, is preferably 800°C or less, is further preferably 600°C or less, and is particularly preferably 500°C or less.

EXAMPLES

The present invention is described specifically with reference to Examples below. The present invention is not limited by Examples below without departing from the scope of the present invention.

[Analysis and Evaluation]

The analysis of the zeolites prepared in Examples and Comparative examples below and the evaluations of the properties of the zeolites were conducted by the following methods.

[Powder XRD Measurement]

<Preparation of Samples>

About 100 mg of each of the zeolite samples was pulverized with an agate mortar by man power and charged into a sample holder having the same shape such that a certain amount of the sample was taken.

<Apparatus Specification and Measurement Conditions>

The specification of the powder XRD measurement apparatus used and the measurement conditions were as follows.

[Table 1]

⟨Specification of Powder XRD measurement apparatus⟩

| Name of apparatus | X'Pert Pro MPD produced by PANalytical, Netherland |
|---|---|
| Optical system | Concentration optical system |
| Optical system specification | Incident side | Gas-filled X-ray tube (CuK$\alpha$) |
| | | Soller Slit (0.04rad) |
| | | Divergence Slit (Variable Slit) |
| | | Knife edge |
| | Sample stage | Rotatable stage stage (Spinner) |
| | Light-receptive side | Semiconductor array detector (X'Celerator) |
| | | Ni-filter |
| | | Soller Slit (0.04rad) |
| | Goniometer radius | 243 mm |

⟨Measurement Conditions⟩

| X-ray output (CuK$\alpha$) | 40kV |
|---|---|
| | 30mA |
| Scanning axis | $\theta/2\theta$ |
| Scanning range ($2\theta$) | 3.0-50.0° |
| Measurement mode | Continuous |
| Read width | 0.018° |
| Counting time | 29.8 sec |
| Automatic variable slit (Automatic-DS) | 10mm (Irradiation width) |

[Analysis of Cu Content and Zeolite Composition]

The Si and Al contents in each of the zeolite standard samples and the copper atoms included in the zeolite sample were analyzed in the following manner.

The zeolite sample was dissolved in an aqueous hydrochloric acid solution while being heated. Subsequently, the contents (weight%) of silicon atoms, aluminum atoms, and Cu atoms were determined by ICP analysis. A calibration curve of the intensity of fluorescent x-ray of each of the analytical elements included in the standard sample to the atomic concentration of the analytical element was prepared. Using the calibration curves, the contents (weight%) of silicon atoms, aluminum atoms, and copper atoms in the zeolite sample were determined by X-ray fluorescence (XRF) analysis.

The ICP analysis was conducted using "ULTIMA 2C" produced by HORIBA, Ltd. The XRF analysis was conducted using "EDX-700" produced by Shimadzu Corporation.

[Evaluation of Catalytic Activity (Initial Activity)]

Each of the prepared catalyst samples was formed into a shape by pressing, crushed, and subsequently passed through a sieve in order to control particle size to be 0.6 to 1 mm.

Then, 1 ml of the graded catalyst sample was charged into a normal-pressure fixed-bed flow reaction tube. While a gas having the composition described in Table 2 was passed through a catalyst layer at a space velocity SV of 200000 /h, the catalyst layer was heated. The nitrogen oxide removal activity of the catalyst sample was evaluated in accordance with the NO conversion rate determined by the following formula at 160°C, 175°C, 200°C, 250°C, 300°C, 400°C, and 500°C when the outlet NO concentration was constant.

$$NO\ conversion\ rate\ (\%)$$
$$= \{(Inlet\ NO\ concentration) - (Outlet\ NO$$
$$concentration)\}/(Inlet\ NO\ concentration) \times 100$$

[Table 2]

| Gas components | Concentration |
|---|---|
| NO | 350 ppm |
| $NH_3$ | 385 ppm |
| $O_2$ | 15 volume% |
| $H_2O$ | 5 volume% |
| $N_2$ | Balance |

[Evaluation of Catalytic Activity (After Hydrothermal Durability Test)]

Each of the prepared catalyst samples was formed into a shape by pressing, crushed, and subsequently passed through a sieve in order to control particle size to be 0.6 to 1 mm. The graded catalyst sample was subjected to the following hydrothermal durability test in which a water vapor treatment was performed. The catalyst sample that had been subjected to the hydrothermal durability test was evaluated in terms of catalytic activity (after hydrothermal durability test) as described above.

<Hydrothermal Durability Test>

In an atmosphere having a space velocity SV of 3000 /h, the graded zeolite sample was passed through 10% by volume of water vapor having a temperature of 800°C for 5 hours.

[Synthesis of 8-Membered Oxygen Ring Zeolite]

[Synthesis of CHA-Type Zeolite]

[Example I-1]

To a mixture of 9.083 g of water, 8.415 g of 35-weight% tetraethylammonium hydroxide (TEAOH) (produced by SACHEM, Inc.), which served as an organic structure-directing agent (SDA), and 0.412 g of NaOH (produced by KISHIDA CHEMICAL Co., Ltd.: 97 weight%), 0.871 g of an FAU-type aluminosilicate zeolite having a Framework density of 12.7 T/1000Å$^3$ (silica/alumina molar ratio = 7, USY-7, produced by JGC Catalysts and Chemicals Ltd.; hereinafter, referred to as "FAU-type zeolite"), which served as an aluminum atom raw material, was added. The resulting mixture was stirred in order to dissolve the above components. Hereby, a transparent solution was formed. To the solution, 5.758 g of colloidal silica "SNOWTEX O-40" produced by Nissan Chemical Industries, Ltd. (silica concentration: 40 weight%) was added as a silicon atom raw material. The resulting mixture was again stirred.

To the mixture, 0.300 g of a non-calcined CHA-type zeolite (average particle size: 0.2 μm, silica/alumina molar ratio: 15), which served as a seed crystal, was added. The mixture was stirred for 2 hours at room temperature. Hereby, a reactant mixture was prepared.

Since the FAU-type zeolite had a silica/alumina ratio of 7, the molar ratio of the amount of the aluminum atom raw material included in the raw material mixture, to which the seed crystal had not been added, to the amount of silicon (Si) included in the raw material mixture was 0.033. The molar ratio of the amount of TEAOH used as an organic structure-directing agent was 0.4. The molar ratio of the amount of water was 20. The molar ratio of the amount of NaOH was 0.2.

The amount of CHA-type zeolite used as a seed crystal was 10% by weight in terms of proportion to $SiO_2$ equivalent.

The reactant mixture was charged into a pressure-resistant container and subjected to hydrothermal synthesis for 3 days while being rotated (15 rpm) in an oven maintained at 160°C.

Subsequent to the hydrothermal synthesis reaction, the reaction liquid was cooled, and the resulting crystals were recovered by filtration. The recovered crystals were dried at 100°C for 12 hours. The resulting zeolite powder was subjected to an XRD analysis, and the peak positions were read. Table 3 shows the results. The results confirmed the synthesis of an 8-membered oxygen ring zeolite, which is a CHA-type zeolite. The Si/Al molar ratio of the zeolite determined by an XRF analysis was 10.7.

[Table 3]

| X-ray source: CuK$\alpha$ | | | $\lambda$ = 1.54184 Å |
|---|---|---|---|
| $2\theta$[°] | d[Å] | Re lative intensity [%] | Intensity [a.u.] |
| 9.6 | 9.23 | 100 | 1266 |
| 13.0 | 6.82 | 16 | 197 |
| 14.1 | 6.28 | 13 | 163 |
| 16.2 | 5.48 | 60 | 759 |
| 18.1 | 4.91 | 15 | 185 |
| 20.8 | 4.27 | 68 | 858 |
| 25.4 | 3.50 | 14 | 175 |
| 26.1 | 3.42 | 18 | 223 |
| 30.9 | 2.90 | 23 | 290 |
| 31.4 | 2.85 | 16 | 208 |

[Comparative Example I-1]

Without using the FAU-type zeolite, 0.318 g of amorphous Al(OH)$_3$ (Al$_2$O$_3$: 53.5 weight%, produced by Aldrich) was mixed with 7.510 g of colloidal silica (silica concentration: 40 weight%, SNOWTEX O-40, produced by Nissan Chemical Industries, Ltd.) such that the reactant mixture had the same Si/Al ratio as in Example I-1. The resulting mixture was stirred in order to dissolve the above components. Hereby, a transparent solution was formed. To the solution, 0.300 g of a non-calcined CHA-type zeolite, which was the same as that used in Example I-1, was added as a seed crystal. The resulting mixture was stirred at room temperature for 2 hours. Hereby, a reactant mixture was formed.

The reactant mixture was charged into a pressure-resistant container and subjected to hydrothermal synthesis for 3 days while being rotated (15 rpm) in an oven maintained at 160°C.

Subsequent to the hydrothermal synthesis reaction, the reaction liquid was cooled, and the resulting crystals were recovered by filtration. The recovered crystals were dried at 100°C for 12 hours. The resulting zeolite powder was subjected to an XRD analysis. The results of the XRD analysis confirmed that no peak occurred and the zeolite was amorphous.

The above results confirm that, in the production method according to the present invention, the desired 8-membered oxygen ring zeolite may fail to be formed when the aluminosilicate zeolite having a framework including d6r is not used.

[Example I-2]

A raw material mixture was prepared by mixing 1.672 g of USY-15 produced by JGC Catalysts and Chemicals Ltd. (silica/alumina molar ratio: 15) and used as an aluminum atom raw material, which is an Y-type aluminosilicate zeolite having a d6r structure, 3.775 g of colloidal silica "SNOWTEX O-40" (silica concentration: 40 weight%) produced by Nissan Chemical Industries, Ltd., which served as a silicon atom raw material, 0.412 g of sodium hydroxide (produced by KISHIDA CHEMICAL Co., Ltd.: 97 weight%), which served as an alkali-metal atom raw material, 8.415 g of tetraethylammonium hydroxide (TEAOH) (produced by SACHEM, Inc., 35 weight%), which served as an organic structure-directing agent (SDA), and 10.285 g of water with one another. To the raw material mixture, 0.3 g of a CHA-type zeolite (non-calcinated product) having an average particle size of 0.2 $\mu$m (as observed with SEM) and a silica/alumina molar ratio of 15 was added as a seed crystal. Hereby, a reactant mixture was prepared.

The reactant mixture was subjected to hydrothermal synthesis at 160°C for 72 hours while being stirred.

The crystal form of the zeolite determined by XRD was a CHA-type. The silica/alumina molar ratio of the zeolite determined by XRF was 18.9.

Table 4 shows the weights of the raw materials charged and the yield. Table 5 shows the molar ratios of the amounts of the raw materials charged relative to the amount of $SiO_2$ being 1, the amount of the seed crystal charged (weight%) in terms of proportion to $SiO_2$ equivalent, and the results. In Table 4, the types of raw materials used are shown in the upper rows, and the amounts (g) of the raw materials charged are shown in the lower rows, for each of Examples. Hereinafter, silica/alumina molar ratio may be referred to as "SAR".

[Examples I-3 to I-13]

The synthesis of a zeolite was performed as in Example I-2, except that the raw materials used were changed as shown in Tables 4 and 5 and, in Example I-13, the amount of reaction time was changed to 24 hours. Table 4 shows the yield, and Table 5 shows the results. The calcinated CHA-type zeolite used in Example I-3 was prepared by calcinating a non-calcinated CHA-type zeolite at 600°C. The CHA-type zeolite used in Example I-10 as an aluminum atom raw material was synthesized using a Y-type zeolite (produced by JGC Catalysts and Chemicals Ltd., silica/alumina ratio: 5) as a raw material by a conventional method and had a silica/alumina ratio of 6.

[Table 4]

| | Silicon atom raw material | Aluminum atom raw material | Alkali-metal atom raw material | SDA (organic structure-directing agent) | Water | Seed crystal | Yield (%) |
|---|---|---|---|---|---|---|---|
| Example I-1 | SNOWTEX O-40 | USY-7 | NaOH | TEAOH | - | CHA non-calcinated product | 56.4 |
| | 5.758 | 0.871 | 0.412 | 8.415 | 9.083 | 0.300 | |
| Example I-2 | SNOWTEX O-40 | USY-15 | NaOH | TEAOH | - | CHA non-calcinated product | 62.7 |
| | 3.755 | 1.672 | 0.412 | 8.415 | 10.285 | 0.300 | |
| Example I-3 | SNOWTEX O-40 | USY-7 | NaOH | TEAOH | - | CHA calcinated product | 51.9 |
| | 5.758 | 0.871 | 0.412 | 8.415 | 9.083 | 0.300 | |
| Example I-4 | SNOWTEX O-40 | USY-7 | NaOH | TEAOH | - | CHA non-calcinated product | 49.3 |
| | 6.459 | 0.523 | 0.412 | 8.415 | 8.663 | 0.300 | |
| Example I-5 | SNOWTEX O-40 | USY-30 | NaOH | TEAOH | - | CHA non-calcinated product | 42.1 |
| | 3.004 | 1.904 | 0.412 | 8.415 | 10.736 | 0.300 | |

(continued)

| | Silicon atom raw material | Aluminum atom raw material | Alkali-metal atom raw material | SDA (organic structure-directing agent) | Water | Seed crystal | Yield (%) |
|---|---|---|---|---|---|---|---|
| Example I-6 | SNOWTEX O-40 | USY-7 | NaOH | TEAOH | - | CHA non-calcinated product | 57.6 |
| | 5.775 | 0.862 | 0.412 | 8.415 | 1.865 | 0.300 | |
| Example I-7 | SNOWTEX O-40 | USY-7 | NaOH | TEAOH | - | CHA non-calcinated product | 59.1 |
| | 5.758 | 0.871 | 0.412 | 8.415 | 9.083 | 0.300 | |
| Example I-8 | SNOWTEX O-40 | USY-7 | NaOH | TEAOH | - | CHA non-calcinated product | 59.1 |
| | 5.758 | 0.871 | 0.412 | 8.415 | 9.083 | 0.300 | |
| Example I-9 | SNOWTEX 40 | USY-7 | NaOH | TEAOH | - | - | 52.3 |
| | 5.758 | 0.871 | 0.412 | 8.415 | 9.083 | - | |
| Example I-10 | SNOWTEX 40 | CHA-type zeolite | NaOH | TEAOH | - | CHA non-calcinated product | 38.2 |
| | 6.023 | 0.763 | 0.412 | 8.415 | 8.924 | 0.300 | |
| Example I-11 | AEROSIL 200 | USY-7 | NaOH | TEAOH | - | CHA non-calcinated product | 53.8 |
| | 2.303 | 0.871 | 0.412 | 8.415 | 11.156 | 0.300 | |
| Example I-12 | SNOWTEX 40 | NaY-5 | NaOH | TEAOH | - | CHA non-calcinated product | 54.2 |
| | 6.258 | 0.671 | 0.412 | 8.415 | 8.783 | 0.300 | |
| Example I-13 | SNOWTEX 40 | USY-7 | NaOH | TEAOH | - | CHA non-calcinated product | 54.8 |
| | 5.758 | 0.871 | 0.412 | 8.415 | 9.083 | 0.300 | |

[Table 5]

| | Molar ratio to 1 mole of SiO$_2$ | | | | | Seed crystal (weight%) | Type of seed crystal | Si source | Al source | XRD | Silica/alumina molar ratio (XRF) |
|---|---|---|---|---|---|---|---|---|---|---|---|
| | SiO$_2$ | Al$_2$O$_3$ | NaOH | TEAOH | H$_2$O | | | | | | |
| Example I-1 | 1 | 0.033 | 0.2 | 0.4 | 20 | 10 | CHA non-calcinated product (0.2 $\mu$m, SAR=15) | ST-O-40 | USY-7 | CHA | 21.4 |
| Example I-2 | 1 | 0.033 | 0.2 | 0.4 | 20 | 10 | CHA non-calcinated product (0.2 $\mu$m, SAR=15) | ST-O-40 | USY-15 | CHA | 18.9 |
| Example I-3 | 1 | 0.033 | 0.2 | 0.4 | 20 | 10 | CHA calcinated product (0.2 $\mu$m, SAR=15) | ST-O-40 | USY-7 | CHA | 19.9 |
| Example I-4 | 1 | 0.020 | 0.2 | 0.4 | 20 | 10 | CHA non-calcinated product (0.2$\mu$m, SAR=15) | ST-O-40 | USY-7 | CHA | 24.2 |
| Example I-5 | 1 | 0.020 | 0.2 | 0.4 | 20 | 10 | CHA non-calcinated product (0.2 $\mu$m, SAR=15) | ST-O-40 | USY-30 | CHA | 22.0 |
| Example I-6 | 1 | 0.033 | 0.2 | 0.4 | 12 | 10 | CHA non-calcinated product (0.2 $\mu$m, SAR=15) | ST-O-40 | USY-7 | CHA | 20.7 |
| Example I-7 | 1 | 0.033 | 0.2 | 0.4 | 20 | 10 | CHA non-calcinated product (3.6 $\mu$m, SAR=26) | ST-O-40 | USY-7 | CHA | 20.7 |
| Example I-8 | 1 | 0.033 | 0.2 | 0.4 | 20 | 10 | CHA non-calcinated product (1.6 $\mu$m, SAR=26) | ST-O-40 | USY-7 | CHA | 20.6 |
| Example I-9 | 1 | 0.033 | 0.2 | 0.4 | 20 | 0 | - | ST-40 | USY-7 | CHA | 21.6 |
| Example I-10 | 1 | 0.033 | 0.2 | 0.4 | 20 | 10 | CHA non-calcinated product (0.2 $\mu$m, SAR=15) | ST-40 | CHA-type zeolite | CHA | 12.2 |
| Example I-11 | 1 | 0.033 | 0.2 | 0.4 | 20 | 10 | CHA non-calcinated product (0.2 $\mu$m, SAR=15) | AEROSIL 200 | USY-7 | CHA | 21.5 |
| Example I-12 | 1 | 0.033 | 0.27 | 0.4 | 20 | 10 | CHA non-calcinated product (0.2 $\mu$m, SAR=15) | ST-40 | NaY-5 | CHA | 18.8 |
| Example I-13 | 1 | 0.033 | 0.2 | 0.4 | 20 | 10 | CHA non-calcinated product (0.2 $\mu$m, SAR=15) | ST-40 | USY-7 | CHA | - |

The meanings of the symbols used in Tables 4 and 5 and Tables 7a and 7b below are as described in Table 6.

[Table 6]

| SNOWTEX O-40 (ST-O-40) | Nissan Chemical Industries, Ltd. | $SiO_2$ 40weight % | - |
|---|---|---|---|
| SNOWTEX 40 (ST-40) | Nissan Chemical Industries, Ltd. | $SiO_2$ 40weight % | - |
| AEROSIL 200 (fumed silica) | Nippon Aerosil Co., Ltd. | $SiO_2$ 100weight % | - |
| USY-30 | JGC Catalysts and Chemicals Ltd. | SAR=30 | FD=12.7T/1000 $Å^3$ |
| USY-15 | JGC Catalysts and Chemicals Ltd. | SAR=15 | FD=12.7T/1000 $Å^3$ |
| USY-7 | JGC Catalysts and Chemicals Ltd. | SAR=7 | FD=12.7T/1000 $Å^3$ |
| NaY-5 | JGC Catalysts and Chemicals Ltd. | SAR=5 | FD=12.7T/1000 $Å^3$ |
| TEAOH | SACHEM, Inc. | 35weight % | Tetraethylammonium hydroxide |
| NaOH | KISHIDA CHEMICAL Co., Ltd. | 97weight % | Sodium hydroxide |
| FD=Framework density | | | |

The results of Example I-5 confirmed that the SAR of the aluminosilicate zeolite used in the present invention is preferably 30 or less. The results of Example I-9 confirmed that the addition of the seed crystal is not essential for producing the CHA-type zeolite. The results of Example I-10 confirmed that an FAU-type zeolite is preferably used as an aluminosilicate zeolite in the present invention.

[Comparative Examples I-2 to I-5]

A zeolite was produced as in Example I-1, except that the conditions described in Table 7a were used. Note that, only in Comparative example I-5, the amount of hydrothermal synthesis time was changed to 48 hours. Table 7b shows the molar ratios of the amounts of the raw materials charged relative to the amount of $SiO_2$ being 1, the amount of the seed crystal charged (weight%) in terms of proportion to $SiO_2$ equivalent, and the results. The aluminum hydroxide amorphous used was a product from Aldrich (alumina equivalent: 53.5 weight%).

[Table 7]

<Table 7a>

| | Silicon atom raw material | Aluminum atom raw material | Alkali-metal atom raw material | SDA (organic structure-directing agent) | Water | Seed crystal |
|---|---|---|---|---|---|---|
| Comparative example I-2 | None*1 | USY-30 | NaOH | Tetramethylammonium hydroxide | - | CHA non-calcinated product |
| | 0 | 3.174 | 0.412 | 7.292 | 3.529 | 0.300 |
| Comparative example I-3 | None*1 | USY-7 | NaOH | TEAOH | - | CHA non-calcinated product |
| | 0 | 3.732 | 0.412 | 8.415 | 3.528 | 0.300 |

(continued)

|  | Silicon atom raw material | Aluminum atom raw material | Alkali-metal atom raw material | SDA (organic structure-directing agent) | Water | Seed crystal |
|---|---|---|---|---|---|---|
| Comparative example I-4 | None*1 | USY-7 | NaOH | TEAOH | - | CHA non-calcinated product |
|  | 0 | 3.732 | 0.412 | 8.415 | 12.538 | 0.300 |
| Comparative example I-5 | AEROSIL 200 | Aluminum hydroxide amorphous | NaOH | TMAAOH *2 | - | CHA non-calcinated product |
|  | 28.8 | 3 | 3.7 | 40.6 | 227.6 | 1.4 |
| *1 Si is included in the aluminum atom raw material<br>*2 N,N,N-trimethyl-1-adamantaneammonium hydroxide | | | | | | |

<Table7b>

| | Molar ratio to 1 mole of $SiO_2$ | | | | | Seed crystal (weight%)) | Type of seed crystal | Si source | Al source | XRD | Silica/alumina molar ratio (XRF) |
|---|---|---|---|---|---|---|---|---|---|---|---|
| | $SiO_2$ | $Al_2O_3$ | NaOH | SDA | $H_2O$ | | | | | | |
| Comparative example I-2 | 1 | 0.0333 | 0.2 | 0.4 | 10 | 10 | CHA non-calcinated product (0.2 $\mu$m, SAR=15) | USY-30 | USY-30 | Lamellar silicate | - |
| Comparative example I-3 | 1 | 0.1429 | 0.2 | 0.4 | 10 | 10 | CHA non-calcinated product (0.2 $\mu$m, SAR=15) | USY-7 | USY-7 | ANA | - |
| Comparative example I-4 | 1 | 0.1429 | 0.2 | 0.4 | 20 | 10 | CHA non-calcinated product (0.2 $\mu$m, SAR=15) | USY-7 | USY-7 | ANA | - |
| Comparative example I-5 | 1 | 0.033 | 0.2 | 0.1 | 30 | 5 | CHA non-calcinated product (0.2 $\mu$m, SAR=15) | AEROSIL 200 | $Al(OH)_3$ amorphous | CHA | 25.8 |

In Comparative example I-2, it was not possible to produce the desired 8-membered oxygen ring zeolite, because the specific quaternary ammonium salt used in the present invention was not used as an SDA.

In Comparative examples I-3 and I-4, an ANA-type zeolite was produced and it was not possible to synthesize the desired 8-membered oxygen ring zeolite, because an aluminosilicate zeolite having a low SAR (e.g., 20 or less) was used and any silicon atom raw material other than the aluminosilicate zeolite was not used.

In Comparative example I-5, which was conducted in accordance with the method for producing an 8-membered ring zeolite used in the related art, it took 48 hours to produce the desired substance by hydrothermal synthesis.

The above results confirmed that a CHA-type zeolite can be produced in the case where a quaternary ammonium salt including 5 to 11 carbon atoms per molecule is used as an SDA and an aluminosilicate zeolite having a high SAR (e.g., 21 or more) is used. It was also confirmed that, in particular, it is possible to produce the desired 8-membered ring zeolite at lower costs by using a quaternary ammonium salt including 5 to 11 carbon atoms per molecule as an SDA, an aluminosilicate zeolite having a low SAR (e.g., 20 or less), and a silicon atom raw material other than the aluminosilicate zeolite.

[Evaluation of Catalytic Activity]

The CHA-type zeolite prepared in Example I-1 was calcinated for 6 hours in an air stream of 600°C in order to remove organic substances included in the zeolite. The calcinated zeolite was dispersed in a 1M aqueous $NH_4NO_3$ solution and ion exchange was performed at 80°C for 2 hours in order to remove Na ions included in the zeolite. After the zeolite had been recovered by filtration, the zeolite was cleaned with ion-exchanged water three times. The resulting zeolite powder was dried at 100°C for 12 hours to prepare a $NH_4$-type zeolite IIIA. The results of XRF analysis of the zeolite IIIA confirmed the removal of 99% or more Na.

In 37 g of water, 1 g of $Cu(OAc)_2 \cdot H_2O$ (produced by KISHIDA CHEMICAL Co., Ltd.) was dissolved to prepare an aqueous solution of copper(II) acetate. The zeolite IIIA was dispersed in the aqueous copper(II) acetate solution, and ion exchange was performed at 40°C for 1.5 hours. After the zeolite (zeolite IIIB) had been recovered by filtration, the zeolite was cleaned with ion-exchanged water three times. Subsequently, 1 g of $Cu(OAc)_2 \cdot H_2O$ (produced by KISHIDA CHEMICAL Co., Ltd.) was dissolved in 37 g of water to prepare an aqueous solution of copper(II) acetate. Zeolite IIIB was dispersed in the solution, and ion exchange was performed at 80°C for 2 hours. After the zeolite (zeolite IIIC) had been recovered by filtration, the zeolite was cleaned with ion-exchanged water three times. The resulting zeolite powder was dried at 100°C for 12 hours and subsequently calcinated at 450°C for 1 hour in the air. Hereby, a catalyst 1 that included a Cu-containing CHA-type zeolite was prepared. The Cu content in the catalyst 1 determined by XRF analysis was 3.3% by weight.

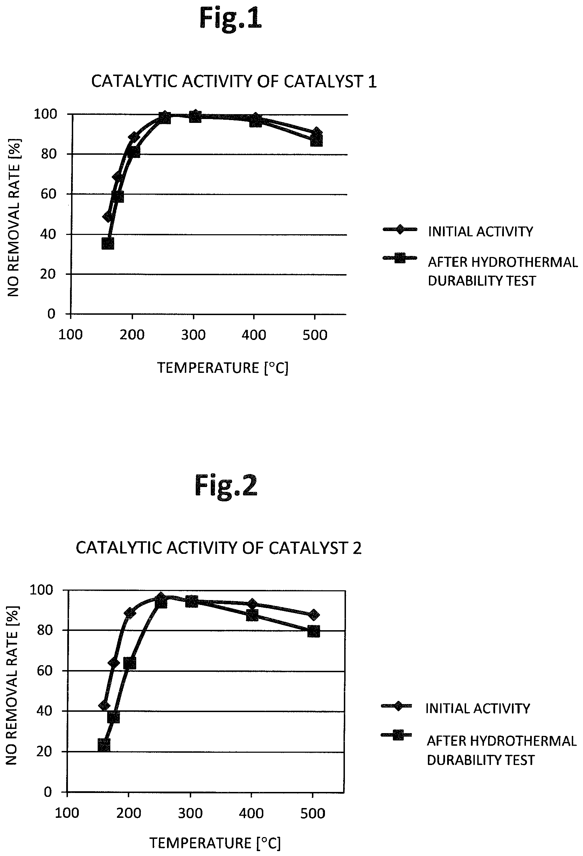

Table 8 and Fig. 1 show the evaluation results of the catalytic activity of the catalyst 1.

A catalyst 2 that included a Cu-containing CHA-type zeolite was prepared as in the preparation of the catalyst 1, except that the zeolite prepared in Comparative example I-5 was used. Table 8 and Fig. 2 show the evaluation results of the catalytic activity of the catalyst 2.

[Table 8]

| | Zeolite | SAR | Cu content (weight%) | Treatment | Catalytic activity (NO conversion rate (%)) | | | | | | |
|---|---|---|---|---|---|---|---|---|---|---|---|
| | | | | | 160°C | 175°C | 200°C | 250°C | 300°C | 400°C | 500°C |
| Catalyst 1 | Example I-1 | 21.4 | 3.3 | Initial activity | 48.7 | 68.4 | 88.4 | 99.0 | 99.6 | 98.2 | 91.0 |
| | | | | After hydrothermal durability test | 35.4 | 58.7 | 81.1 | 98.2 | 98.8 | 96.7 | 87.0 |
| Catalyst 2 | Comparative example I-5 | 25.8 | 3.0 | Initial activity | 42.6 | 63.9 | 88.5 | 96.3 | 94.8 | 93.2 | 87.9 |
| | | | | After hydrothermal durability test | 23.4 | 37.0 | 63.8 | 94.0 | 94.5 | 87.7 | 79.7 |

As is clear from the results shown in Table 8 and Figs. 1 and 2, the CHA-type zeolite prepared by the production method according to the present invention had excellent initial catalytic activity. The CHA-type zeolite maintained high catalytic activity even after the hydrothermal durability test conducted at 800°C for 5 hours. This confirms that the CHA-type zeolite had high durability.

[Synthesis of AEI-Type Zeolite]

[Example II-1]

To a mixture of 1.5 g of water, 1.9 g of tetraethylammonium hydroxide (TEAOH) (produced by SACHEM, Inc.), which served as an organic structure-directing agent (SDA), and 0.5 g of NaOH (produced by Wako Pure Chemical Industries, Ltd.), 1.9 g of an FAU-type zeolite (silica/alumina molar ratio: 30, produced by Zeolyst) having a Framework density of 12.7 T/1000Å$^3$ was added. The resulting mixture was stirred in order to dissolve the above components. Hereby, a transparent solution was formed. To the solution, 0.4 g of a non-calcinated AEI-type zeolite (average particle size: 3 $\mu$m, same as the zeolite used in Examples and Comparative examples below) was added. The resulting mixture was stirred at room temperature for 2 hours to form a reactant mixture.
The reactant mixture was charged into a pressure-resistant container and aged for 2 days while being rotated (15 rpm) in an oven maintained at 90°C. Subsequently, the reactant mixture was subjected to hydrothermal synthesis for 3 days while being rotated (15 rpm) in an oven maintained at 160°C.
Subsequent to the hydrothermal synthesis reaction, the reaction liquid was cooled and filtered in order to recover crystals. The recovered crystals were dried at 100°C for 12 hour. Hereby, an AEI-type zeolite II-1 was prepared.

[Example II-2]

An AEI-type zeolite II-2 was produced by preparing a reactant mixture and performing aging, hydrothermal synthesis, and recovery as in Example II-1, except that the amount of water used was changed to 6.9 g.

[Example II-3]

To a mixture of 10 g of water, 3.8 g of tetraethylammonium hydroxide (TEAOH) (produced by SACHEM, Inc.), which served as an organic structure-directing agent (SDA), 0.5 g of NaOH (produced by Wako Pure Chemical Industries, Ltd.), and 0.8 g of KOH (produced by Wako Pure Chemical Industries, Ltd.), 4.2 g of an FAU-type zeolite (silica/alumina molar ratio: 10, produced by Zeolyst) having a Framework density of 12.7 T/1000Å$^3$ was added. The resulting mixture was stirred in order to dissolve the above components. Hereby, a transparent solution was formed. To the solution, 0.2 g of a non-calcinated AEI-type zeolite (average particle size: 3 $\mu$m, same as the zeolite used in Examples and Comparative examples below) was added. The resulting mixture was stirred at room temperature for 2 hours to form a reactant mixture.
The reactant mixture was charged into a pressure-resistant container and subjected to hydrothermal synthesis for 3 days while being rotated (15 rpm) in an oven maintained at 160°C.
Subsequent to the hydrothermal synthesis reaction, the reaction liquid was cooled and filtered in order to recover crystals. The recovered crystals were dried at 100°C for 12 hour. Hereby, an AEI-type zeolite II-3 was prepared. The results of XRD analysis of the zeolite confirmed that the zeolite was an AEI-type zeolite because peaks occurred at the positions 2$\theta$ = 9.6°, 15.9°, 21.0°, and 23.6°, which are typical of an AEI-type zeolite.

[Comparative Example II-1]

To a mixture of 5.1 g of TEAOH (produced by SACHEM, Inc.) used as an organic structure-directing agent (SDA) and 0.2 g of NaOH (produced by Wako Pure Chemical Industries, Ltd.), 0.5 g of amorphous Al(OH)$_3$ (Al$_2$O$_3$: 53.5 weight%, produced by Aldrich) and 4.5 g of colloidal silica (silica concentration: 40 weight%, SNOWTEX40, produced by Nissan Chemical Industries, Ltd.) were added. The resulting mixture was stirred in order to dissolve the above components. Hereby, a transparent solution was prepared. To the solution, 0.4 g of a non-calcinated AEI-type zeolite was added. The mixture was stirred at room temperature for 2 hours to form a reactant mixture.
The reactant mixture was charged into a pressure-resistant container and aged for 2 days while being rotated (15 rpm) in an oven maintained at 90°C. Subsequently, the reactant mixture was subjected to hydrothermal synthesis for 3 days while being rotated (15 rpm) in an oven maintained at 170°C.
Subsequent to the hydrothermal synthesis reaction, the reaction liquid was cooled and filtered in order to recover crystals. The recovered crystals were dried at 100°C for 12 hour. Hereby, a BEA-type zeolite II-4 was prepared.

[Comparative Example II-2]

To a mixture of 4.8 g of water, 5.1 g of TEAOH (produced by SACHEM, Inc.) used as an organic structure-directing agent (SDA), and 0.2 g of NaOH (produced by Wako Pure Chemical Industries, Ltd.), 0.5 g of amorphous $Al(OH)_3$ ($Al_2O_3$: 53.5 weight%, produced by Aldrich) and 4.5 g of colloidal silica (silica concentration: 40 weight%, SNOWTEX40, produced by Nissan Chemical Industries, Ltd.) were added. The resulting mixture was stirred in order to dissolve the above components. Hereby, a transparent solution was prepared. To the solution, 0.4 g of a non-calcinated AEI-type zeolite was added. The mixture was stirred at room temperature for 2 hours to form a reactant mixture.
The reactant mixture was charged into a pressure-resistant container, and aging, hydrothermal synthesis, and recovery were performed as in Comparative example II-1. Hereby, a BEA-type zeolite II-5 was prepared.

[Comparative Example II-3]

To a mixture of 5.4 g of water and 0.5 g of NaOH (produced by Wako Pure Chemical Industries, Ltd.), 1.9 g of an FAU-type zeolite (silica/alumina molar ratio: 30, produced by Zeolyst) having a Framework density of 12.7 $T/1000Å^3$ was added. The resulting mixture was stirred in order to dissolve the above components. Hereby, a transparent solution was prepared. To the solution, 0.4 g of a non-calcinated AEI-type zeolite was added. The mixture was stirred at room temperature for 2 hours to form a reactant mixture.
The reactant mixture was charged into a pressure-resistant container, and aging, hydrothermal synthesis, and recovery were performed as in Example II-1. Hereby, an MOR-type zeolite II-6 was prepared.
Table 9 summarizes the charge compositions of the raw material mixtures and the reactant mixtures prepared in Examples II-1 to II-3 and Comparative examples II-1 to II-3 and the types of zeolites prepared in Examples II-1 to II-3 and Comparative examples II-1 to II-3.
In Table 9, the charge compositions of zeolites refer to the following.
$Al_2O_3$, NaOH, SDA, and $H_2O$: molar ratio of the amount of the raw material to the amount of Si included in the raw material mixture that does not include the seed crystal AEI-type zeolite used as a seed crystal: proportion to $SiO_2$ equivalent, that is, the proportion (weight%) of the amount of seed crystal to the amount of $SiO_2$ that is to be included in the raw material mixture, which does not include the seed crystal, when all the Si atoms included in the raw material mixture are replaced with $SiO_2$.

[Table 9]

| | Type of SDA | $Al_2O_3$* | NaOH | KOH | $H_2O$ | SDA | Zeolite framework-forming atom raw material | Seed crystal (AEI type) | Crystal structure of zeolite by XRD |
|---|---|---|---|---|---|---|---|---|---|
| ExampleII-1 | TEAOH | 0.033 | 0.4 | - | 5 | 0.15 | FAU-type zeolite | 20 | AEI |
| ExampleII-2 | TEAOH | 0.033 | 0.4 | - | 15 | 0.15 | FAU-type zeolite | 20 | AEI |
| ExampleII-3 | TEAOH | 0.100 | 0.2 | 0.2 | 15 | 0.15 | FAU-type zeolite | 10 | AEI |
| Comparative exampleII-1 | TEAOH | 0.050 | 0.2 | - | 11 | 0.15 | Amorphous Al $(OH)_3$ + colloidal silica | 20 | BEA |
| Comparative exampleII-2 | TEAOH | 0.050 | 0.2 | - | 20 | 0.15 | Amorphous Al $(OH)_3$ + colloidal silica | 20 | BEA |
| Comparative exampleII-3 | None | 0.033 | 0.4 | - | 10 | - | FAU-type zeolite | 20 | MOR |
| *Molar ratio in terms of alumina equivalent | | | | | | | | | |

In Comparative examples II-1 and II-2, where an aluminosilicate zeolite having a framework including d6r was not used, it was not possible to produce the desired AEI-type zeolite even when a quaternary ammonium salt including 5 to 11 carbon atoms per molecule was used as an SDA.

In Comparative example II-3, where an aluminosilicate zeolite having a framework including d6r was used but any SDA was not used, it was not possible to produce the desired AEI-type zeolite.

From the above results, it was confirmed that 8-membered oxygen ring zeolite can be produced by using an organic structure directing agent which is inexpensive and industrially easily available such as tetraethylammonium hydroxide, by using a specific aluminosilicate zeolite and a silicon atom raw material other than the aluminosilicate zeolite.

Further, it was confirmed that AEI type zeolite can be produced by using an organic structure directing agent which is inexpensive and industrially easily available such as tetraethylammonium hydroxide and the like by using a specific aluminosilicate zeolite and an AEI type zeolite as a seed crystal at a predetermined ratio.

Industrial applicability

According to the present invention, it is possible to obtain 8-membered oxygen ring zeolite, especially CHA type zeolite or AEI type zeolite, by using an industrially easily available and inexpensive organic structure directing agent. It can suitably be used for exhaust gas treatment and other catalysts, separation membranes and the like.

Although the present invention has been described in detail using specific embodiments, it will be apparent to those skilled in the art that various modifications are possible without departing from the spirit and scope of the present invention.

This application is based on Japanese Patent Application No. 2015-232040 filed on November 27, 2015, the entirety of which is incorporated by reference.

**Claims**

1. A method for producing an 8-membered oxygen ring zeolite, the method comprising mixing an aluminum atom raw material, a silicon atom raw material, an alkali-metal atom raw material, an organic structure-directing agent, and water with one another in order to prepare a raw material mixture, and producing an 8-membered oxygen ring zeolite from the raw material mixture by hydrothermal synthesis,
the aluminum atom raw material including at least an aluminosilicate zeolite having a framework including a composite building unit d6r defined by International Zeolite Association (IZA), the aluminosilicate zeolite having a framework density of 15 T/1000Å$^3$ or less,
the silicon atom raw material including at least the aluminosilicate zeolite and a silicon atom raw material other than the aluminosilicate zeolite,
the organic structure-directing agent including at least a quaternary ammonium salt including 5 to 11 carbon atoms per molecule.

2. The method for producing an 8-membered oxygen ring zeolite according to Claim 1, wherein the aluminosilicate zeolite has a silica/alumina molar ratio of 20 or less.

3. The method for producing an 8-membered oxygen ring zeolite according to Claim 1 or 2, wherein the silicon atom raw material other than the aluminosilicate zeolite includes at least one selected from fumed silica, colloidal silica, non-crystalline silica, water glass, sodium silicate, methyl silicate, ethyl silicate, a silicon alkoxide, and an aluminosilicate gel.

4. The method for producing an 8-membered oxygen ring zeolite according to any one of Claims 1 to 3, wherein an 8-membered oxygen ring zeolite that serves as a seed crystal is mixed with the raw material mixture in an amount equal to 0.1% by weight or more of the amount of $SiO_2$ that is to be included in the raw material mixture when all the Si atoms included in the raw material mixture are replaced with $SiO_2$.

5. The method for producing an 8-membered oxygen ring zeolite according to any one of Claims 1 to 4, wherein the quaternary ammonium salt is tetraethylammonium hydroxide.

6. The method for producing an 8-membered oxygen ring zeolite according to any one of Claims 1 to 5, wherein the organic structure-directing agent includes at least one selected from an alicyclic heterocyclic compound including a hetero atom that is a nitrogen atom, an amine including an alkyl group, and an amine including a cycloalkyl group.

7. The method for producing an 8-membered oxygen ring zeolite according to Claim 4, wherein the seed crystal has an average particle size of 0.1 to 5.0 $\mu$m.

8. The method for producing an 8-membered oxygen ring zeolite according to any one of Claims 1 to 7, wherein the molar ratio of the amount of water included in the raw material mixture to the amount of Si included in the raw material mixture is 3 or more and 50 or less.

9. A method for producing a CHA-type zeolite, the method comprising mixing an aluminum atom raw material, a silicon atom raw material, an alkali-metal atom raw material, an organic structure-directing agent, and water with one another in order to prepare a raw material mixture, and producing a CHA-type zeolite from the raw material mixture by hydrothermal synthesis,
the aluminum atom raw material including at least an aluminosilicate zeolite having a framework including a composite building unit d6r defined by International Zeolite Association (IZA),
the silicon atom raw material including at least the aluminosilicate zeolite and a silicon atom raw material other than the aluminosilicate zeolite,
the organic structure-directing agent including at least a quaternary ammonium salt including 5 to 11 carbon atoms per molecule.

10. A method for producing an AEI-type zeolite, the method comprising mixing a zeolite framework-forming atom raw material, an alkali-metal atom raw material, an organic structure-directing agent, and water with one another in order to prepare a raw material mixture, and producing an AEI-type zeolite from the raw material mixture by hydrothermal synthesis,
the zeolite framework-forming atom raw material including at least an aluminosilicate zeolite having a framework including a composite building unit d6r defined by International Zeolite Association (IZA),
the organic structure-directing agent including at least a quaternary alkyl ammonium salt including 5 to 11 carbon atoms per molecule,
wherein an AEI-type zeolite that serves a seed crystal is mixed with the raw material mixture in an amount equal to 0.5% by weight or more of the amount of $SiO_2$ that is to be included in the raw material mixture when all the Si atoms included in the raw material mixture are replaced with $SiO_2$ in order to prepare a reactant mixture, and
the reactant mixture is subjected to hydrothermal synthesis.

11. The method for producing an AEI-type zeolite according to Claim 10, wherein the aluminosilicate zeolite has a framework density of 14.5 T/1000Å$^3$ or less.

12. The method for producing an AEI-type zeolite according to Claim 10 or 11, wherein the zeolite framework-forming atom raw material includes the aluminosilicate zeolite and at least one selected from fumed silica, colloidal silica, non-crystalline silica, sodium silicate, methyl silicate, ethyl silicate, a silicon alkoxide, and an aluminosilicate gel.

13. The method for producing an AEI-type zeolite according to any one of Claims 10 to 12, wherein the quaternary alkyl ammonium salt is a quaternary alkyl ammonium hydroxide.

14. The method for producing an AEI-type zeolite according to Claim 13, wherein the quaternary alkyl ammonium hydroxide is tetraethylammonium hydroxide.

15. A method for producing a catalyst, the method comprising producing a catalyst including an 8-membered oxygen ring zeolite by the method for producing an 8-membered oxygen ring zeolite according to any one of Claims 1 to 8.

16. A method for producing a catalyst, the method comprising producing an 8-membered oxygen ring zeolite by the method for producing an 8-membered oxygen ring zeolite according to any one of Claims 1 to 8, and loading a metal other than Si or Al on the 8-membered oxygen ring zeolite.

17. A method for producing a catalyst, the method comprising producing a catalyst including a CHA-type zeolite by the method for producing a CHA-type zeolite according to Claim 9.

18. A method for producing a catalyst, the method comprising producing a CHA-type zeolite by the method for producing a CHA-type zeolite according to Claim 9, and loading a metal other than Si or Al on the CHA-type zeolite.

19. A method for producing a catalyst, the method comprising producing a catalyst including an AEI-type zeolite by the method for producing an AEI-type zeolite according to any one of Claims 10 to 14.

20. A method for producing a catalyst, the method comprising producing an AEI-type zeolite by the method for producing an AEI-type zeolite according to any one of Claims 10 to 14, and loading a metal other than Si or Al on the AEI-type zeolite.

21. The method for producing a catalyst according to any one of Claims 15 to 20, the method being a method for producing a catalyst used for treating an exhaust gas.

22. The method for producing a catalyst according to any one of Claims 15 to 20, the method being a method for producing a catalyst used for selectively reducing an exhaust gas containing nitrogen oxide.

# Fig.1

CATALYTIC ACTIVITY OF CATALYST 1

- ◆ INITIAL ACTIVITY
- ■ AFTER HYDROTHERMAL DURABILITY TEST

# Fig.2

CATALYTIC ACTIVITY OF CATALYST 2

- ◆ INITIAL ACTIVITY
- ■ AFTER HYDROTHERMAL DURABILITY TEST

## INTERNATIONAL SEARCH REPORT

| International application No. |
| --- |
| PCT/JP2016/082393 |

### A. CLASSIFICATION OF SUBJECT MATTER

*C01B39/48*(2006.01)i, *B01D53/86*(2006.01)i, *B01D53/94*(2006.01)i, *B01J29/76*(2006.01)i, *B01J37/04*(2006.01)i, *B01J37/10*(2006.01)i

According to International Patent Classification (IPC) or to both national classification and IPC

### B. FIELDS SEARCHED

Minimum documentation searched (classification system followed by classification symbols)
C01B39/48, B01D53/86, B01D53/94, B01J29/76, B01J37/04, B01J37/10

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2015-505290 A  (PQ Corp.),<br>19 February 2015 (19.02.2015),<br>claims 13 to 16; paragraphs [0053], [0059],<br>[0085], [0086]<br>& US 2013/0142727 A1<br>claims 13 to 38; paragraphs [0059], [0065]<br>& WO 2013/082560 A1    & EP 2785643 A1 | 1-22 |
| A | JP 2004-043296 A  (Mitsubishi Gas Chemical Co.,<br>Inc.),<br>12 February 2004 (12.02.2004),<br>claims 9 to 24; paragraphs [0066] to [0071]<br>& US 2005/0249661 A1<br>claims 9 to 24; paragraphs [0156] to [0160]<br>& WO 2003/099720 A1    & EP 1512667 A1 | 1-22 |

☒ Further documents are listed in the continuation of Box C.　　☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 November 2016 (30.11.16) | 13 December 2016 (13.12.16) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

International application No.

PCT/JP2016/082393

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2015-533343 A  (BASF Corp.),<br>24 November 2015 (24.11.2015),<br>claims 1 to 10; paragraph [0006]<br>& US 8961914 B2<br>claims 1 to 20; column 1, line 63 to column 2,<br>line 5<br>& WO 2014/062952 A1     & EP 2908944 A1 | 1-22 |
| A | JP 2004-524252 A  (Exxonmobil Chemical Patents<br>Inc.),<br>12 August 2004 (12.08.2004),<br>claims 1 to 18<br>& US 2002/0165089 A1<br>claims 1 to 31<br>& WO 2002/070407 A1     & EP 1365992 A1 | 1-22 |
| A | JP 2015-134698 A  (Hiroshima University),<br>27 July 2015 (27.07.2015),<br>entire text<br>& US 2016/0144347 A1<br>entire text<br>& WO 2015/005369 A1      & EP 3020687 A1 | 1-22 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013159825 A
- US 4544538 A
- US 5958370 A
- JP 2015232040 A

**Non-patent literature cited in the description**

- *Chemical, Communications,* vol. 48, 8264-8266
- ATLAS OF ZEOLITE FRAME WORK TYPES. ELSEVIER, 2007